# EUROPEAN PATENT APPLICATION

(11) **EP 1 237 097 A2**
(43) Date of publication of application: **04.09.2002**
(21) Application number: 02004514.2
(22) Date of filing: 27.02.2002
(51) Int. Cl.: G06F 17/30

(54) **System and method for scheduling data broadcast**

(30) Priority: 27.02.2001 JP 2001053088
(71) Applicant: MATSUSHITA ELECTRIC INDUSTRIAL CO., LTD., Kadoma-shi, Osaka (JP)
(72) Inventor: Nakagawa, Aki, Fujisawa-shi, Kanagawa (JP); Shinohara, Hiroki, Yokohama-shi, Kanagawa (JP); Tsukidate, Ryota, Kanagawa (JP); Kageyama, Mitsuhiro, Tachikawa-shi, Tokyo (JP); Nabeshima, Shinji, Suita-shi, Osaka (JP); Iino, Daisuke, Matsudo-shi, Chiba (JP); Kobayashi, Norihiko, Tokyo (JP); Arai, Yuko, Tokyo (JP)
(74) Representative: Grünecker, Kinkeldey, Stockmair & Schwanhäusser Anwaltssozietät

(57) **Abstract**

The present invention makes arrangements for preventing data overflow from storage areas of store-type terminals in a data broadcast system distributing data over broadcast. There are provided a storage management part for managing storage areas of receiving machines, a database part for holding contents data and storage management information, which is data for managing the capacities of storage areas of the receiving machines, and a schedule management part for scheduling data distribution, wherein the storage management part uses a change history of storage management information and data contents held in the database part to perform control such as deletion, size decrease, addition, and size increase of the contents data, and the schedule management part manages the capacities of storage areas of the receiving machines by scheduling the distribution of data to the receiving machines.

## Description

### BACKGROUND OF THE INVENTION

### Field of the Invention

The present invention relates to the technical field of managing data to be transmitted in a system which transmits data over broadcast, communication, or the like.

### Description of Prior Art

Conventionally, in creating a schedule of transmitting data over broadcast, only a time axis and a transmit bandwidth for a data amount have been taken into account to determine whether a total amount of data to be transmitted fits within the data transmit band.

However, in the case where data is distributed over broadcast, and is received in a receiving machine and stored in a storage area, the capacity of the storage area of the receiving machine must also be taken into account. Furthermore, if there is an increase or decrease in the data, the data may not fit in the storage area unless the order of transmitting the data is controlled at a transmitting side.

For example, when data A of 30MB and data B of 30MB are stored in a receiving machine having a storage capacity of 60MB, assume that the data A is to be changed to 50MB and the data B to 10MB. A data transmitting apparatus adds the size (50MB) of new data A and the size 10MB of new data B to find 60MB, which does not exceed the storage capacity of the receiving machine. However, actually, at the point where the receiving machine has stored the new data A earlier than the new data B, the sum of the size 50MB of the new data A and the size 30MB of old data B becomes 80MB, which exceeds the storage capacity.

In the case where plural agencies cooperate to provide storage broadcast service, to store contents data of the plural agencies in a receiving machine, storage capacity maximum sizes occupied in a storage area of the receiving machine may be decided by contract. In this case, an increase or decrease in the storage capacity maximum sizes due to a change of contract conditions and an increase or decrease in actual data must also be taken into account. This means the need to avoid a situation in which, before receiving contract information indicating an increase of a storage capacity maximum size of agency A, if a receiving machine receives increased contents data according to new contract information, contents data exceeding the contract size of the agency A may be stored in the receiving machine.

### SUMMARY OF THE INVENTION

The present invention provides a data transmitting apparatus used for data broadcast or the like with a transmitting part for transmitting data, a communication part for communicating data, a schedule management part for scheduling data distribution, a terminal management part for managing a history of communications with receiving machines, a storage management part for managing the status of storage areas of the receiving machines, and a database part for holding storage management information and contents data. The receiving machines are provided with a receiving part for receiving broadcast, a communication part for acquiring data over a communication line, a data processing part for processing received data, storage areas for holding storage management information and contents data, a timer processing part for performing timer processing, and a data allocation part for allocating a storage area to data to be received.

According to the parts described above, storage management information for storage areas of receiving machines, maximum sizes and additional information of contents data, and a history of communications with receiving machines, which are held in the database part of the data transmitting apparatus, are used for the storage management part to manage storage areas of the receiving machines and for the schedule management part to schedule data distribution to the receiving machines. Thereby, contents data is deleted or decreased, and added or increased in that order, so that the capacities of storage areas of the receiving machines can be managed. When data overflows from the storage areas of the receiving machines due to an unexpected accident or the like, which data to delete is optimized based on the storage management information and communication history to issue a delete instruction, whereby the storage areas of the receiving machines can be restored to a normal state.

Therefore, according to the present invention, data can be stored in the receiving machines without fail and the occurrence of an overflow of storage areas can be minimized. Also, when data to be stored overflows from a storage area of a receiving machine, quick restoration can be achieved. Also, the present invention can prevent the occurrence of an overflow of storage areas in the case where selection type contents such as pay contents, and contents data with receive conditions, which are variable in the amount of contents to be stored, depending on receiving machines, are stored, and in the case where contents data is urgently increased or deleted.

Therefore, a first object of the present invention is to provide a method of creating a data broadcast schedule in order that a data transmitting side can correctly recognize or estimate a situation of receiving machines to perform data broadcast and the receiving machines can correctly receive and store data.

A second object of the present invention is to provide receiving machines that can notify a transmitting side of a level of storage of contents data in storage areas of their own in order that the data transmitting side can correctly recognize or estimate a situation of the receiving machines to perform data broadcast.

A third object of the present invention is to provide receiving machines that can store received contents data only when it is determined that the size of contents data in a storage area of their own does not exceed a maximum size of the storage area in order that it can receive the data transmitted for the purpose of data broadcast from a data transmitting side without fail.

A fourth object of the present invention is to provide a program for creating data broadcast schedules in order that a data transmitting side can correctly recognize or estimate a situation of receiving machines to perform data broadcast and the receiving machines can correctly receive and store data.

A fifth object of the present invention is to provide a recording medium for storing the program for creating data broadcast schedules in order that a data transmitting side can correctly recognize or estimate a situation of receiving machines to perform data broadcast and the receiving machines can correctly receive and store data.

The objects and advantages of the present invention will become more apparent from embodiments described below with reference to the accompanying drawings.

### BRIEF DESCRIPTION OF THE DRAWINGS

FIG. 1 is a block diagram showing a configuration of a whole data broadcast system in a first embodiment of the present invention;
FIG. 2 is a block diagram showing a configuration of a receiving machine according to the first embodiment;
FIG. 3 is a drawing showing an example of terminal management information held in a data transmitting apparatus in the first embodiment;
FIG. 4 is a drawing showing an example of contract information held in the data transmitting apparatus in the first embodiment;
FIG. 5 is a drawing showing an example of subarea management information held in the data transmitting apparatus in the first embodiment;
FIG. 6 is a drawing showing a list of items of contents information held in the data transmitting apparatus in the first embodiment;
FIG. 7 is a drawing showing an example of storage management information (contract information) held in the receiving machine in the first embodiment;
FIG. 8 is a drawing showing an example of contents information held in the receiving machine in the first embodiment;
FIG. 9 is a flowchart showing an example of storage management information exchange operations between the data transmitting apparatus and the receiving machine in the first embodiment;
FIG. 10 is a flowchart showing another example of storage management information exchange operations between the data transmitting apparatus and the receiving machine in the first embodiment;
FIG. 11 is a drawing showing an example of information about percentage of acquisition success of deleted or decreased contents resulting from deleting or decreasing subareas in a fourth embodiment of the present invention;
FIG. 12 is a drawing showing an example of history information of storage area overflow of the receiving machine in the fourth embodiment;
FIG. 13 is a drawing showing an example of information about areas of selective contents in a sixth embodiment of the present invention;
FIG. 14 is a drawing showing an example of attribute information held in a receiving machine in a seventh embodiment of the present invention;
FIG. 15 is a drawing for explaining an example of a relationship between a contents holding state in the data transmitting apparatus in the first embodiment of the present invention, and transmitting data produced as a result of scheduling the distribution of contents data by a schedule management part;
FIG. 16 is a drawing showing an example of subarea change management information held in the data transmitting apparatus in the first embodiment of the present invention;
FIG. 17 is a drawing showing another example of a list of items of contents information held in a receiving machine in a fifth embodiment of the present invention;
FIG. 18 is a drawing showing an example of scheduling when a contract size is decreased, in a second embodiment of the present invention;
FIG. 19 is a drawing showing an example of conditioned data transmitted from a data transmitting apparatus in the seventh embodiment of the present invention;
FIG. 20 is a drawing showing an example of conditioned data in the case where receiving conditions are changed, in the seventh embodiment of the present invention;
FIG. 21 is a drawing showing an example of emergency data transmitted from a data transmitting apparatus in an eighth embodiment of the present invention;
FIG. 22 is a drawing showing an example of grouped subarea management information in the seventh embodiment of the present invention;
FIG. 23 is a drawing showing an example of grouped subarea management information and group information in the seventh embodiment of the present invention;
FIG. 24 is a drawing showing an example of a deletion data list for managing contents data to be deleted, in a fifth embodiment of the present invention;
FIG. 25 is a drawing an example of terminal management information with version of a deletion data list in the fifth embodiment of the present invention;
FIG. 26 is a drawing showing registration and transmission of contents data in the first embodiment of the present invention;
FIG. 27 is a flowchart of processing performed when a contact size is decreased, in the second embodiment of the present invention;
FIG. 28 is a flowchart of example 1 when a maximum size of subarea is decreased, in a third embodiment of the present invention;
FIG. 29 is a flowchart of example 1 when a maximum size of subarea is increased, in the third embodiment of the present invention;
FIG. 30 is a flowchart of example 2 when maximum sizes of subareas are decreased and increased, in the fourth embodiment of the present invention;
FIG. 31 is a flowchart for creating transmitting data having receive conditions in the case where receive conditions or attribute information is changed, in the seventh embodiment of the present invention;
FIG. 32 is a drawing showing an example of a list of contents having receive conditions in the case where receive conditions or attribute information is changed, in the seventh embodiment of the present invention; and
FIG. 33 is a drawing showing an example of subarea management information and group information in the case where receive conditions or attribute information is changed, in the seventh embodiment of the present invention.

### DESCRIPTION OF THE PREFERRED EMBODIMENTS

Embodiments of the present invention will be described with reference to the accompanying drawings. The embodiments assume the configuration in which plural agencies such as communication sales agencies make storage broadcast contracts with service agencies providing storage broadcast services to practice their respective data broadcasts, wherein storage areas of receiving machines are allocated to the agencies according to contract conditions, a maximum permissible size to store contents data in storage areas of the receiving machines is specified in a contract with each of the agencies, and the storage broadcast service agencies store contents data in the storage areas according to the contract. The present invention is not limited to these embodiments and can be implemented in various configurations without departing from the spirit and scope of the present invention. The agencies may not be plural but single, and the services may also include services provided over communication lines.

Hereinafter, the contents data or contents are the smallest unit of data constituting a data broadcast and having broadcast contents detectable to broadcast users, such as, e.g., one program. The term data is a generic name for contents data and data including other management information.

### (First embodiment)

In a first embodiment of the present invention, management information such as allocation of storage areas of receiving machines is transmitted from a data transmitting apparatus to the receiving machine over communication, and contents data itself is transmitted and received over broadcast.

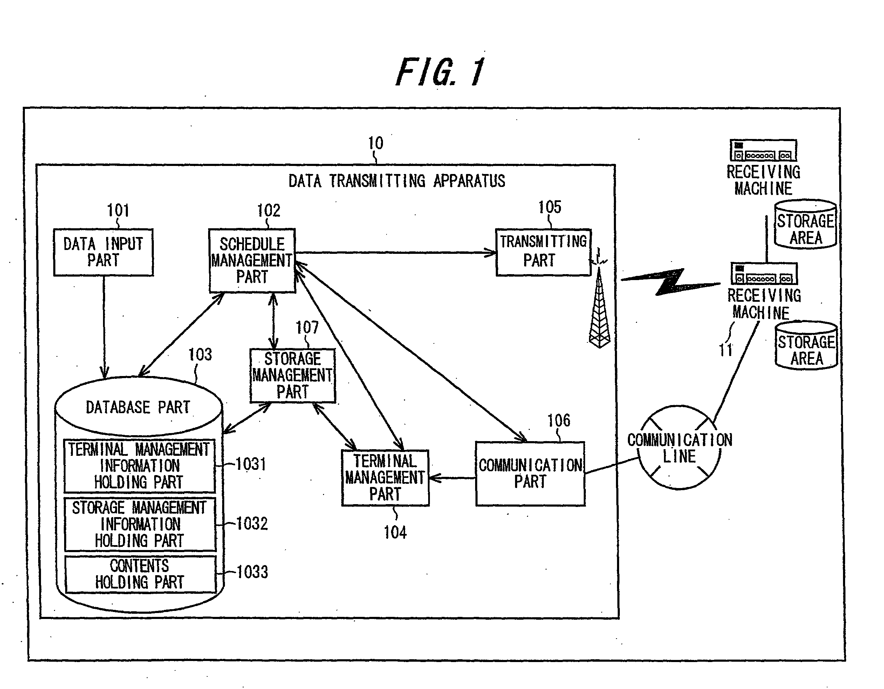

FIG. 1 is a block diagram showing a configuration of a whole data broadcast system in the first embodiment of the present invention. In the first embodiment, a data transmitting apparatus 10 transmits data and receiving machines 11 receives the data over broadcast or communication lines. Storage management information, which is information for managing storage areas of the receiving machines, is transmitted from the data transmitting apparatus 10 to the receiving machines 11. Other contents data is transmitted from the data transmitting apparatus 10 to the receiving machines 11 over broadcast.

The data transmitting apparatus 10 comprises: a data input part 101 that registers data to be transmitted; a schedule management part 102 that creates a transmitting schedule defining when to transmit what data; a database part 103 that stores and manages transmitting data information and receiving machine management information; a terminal management part 104 that manages information about each receiving machine; a transmitting part 105 that broadcasts data according to schedules of the schedule management part 102; a communication part 106 that communicates data according to schedules of the schedule management part 102; and a storage management part 107 that manages storage areas of the receiving machines. The database part 103 comprises: a terminal management information holding part 1031; a storage management information holding part 1032; and a contents holding part 1033. Hereinafter, the terminal management information holding part 1031, the storage management information holding part 1032, and the contents holding part 1033 together will be described as the database part 1003. Data transmitted from the data transmitting apparatus 10 is received and stored in the receiving machines.

The data input part 101, the schedule management part 102, the database part 103, the terminal management part 104, the transmitting part 105, the communication part 106, and the storage management part 107 may be configured in an identical device or different devices so that they are integrated over a network. There may be plural data input parts 101, transmitting parts 105, and communication parts 106. The storage management part 107 may be included in the schedule management part 102.

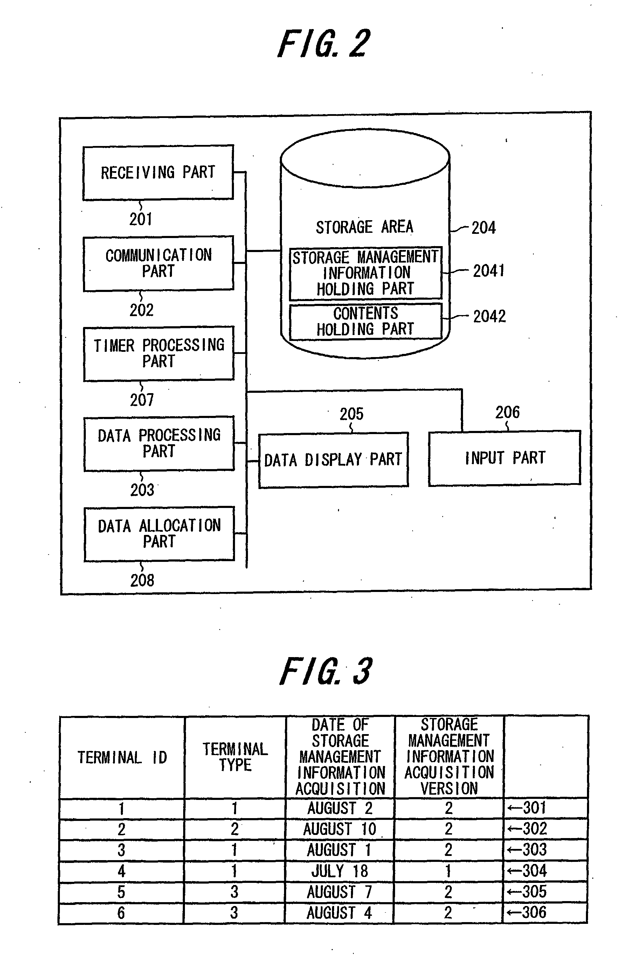

FIG. 2 is a block diagram showing a configuration of a receiving machine according to the first embodiment. The receiving machine comprises: a receiving part 101 that receives data broadcast from the data broadcast system; a communication part 202 that acquires necessary data over a communication line; a data processing part 203 that processes data; a storage area 204 to store data; a data display part 205 that displays received data and processing results; an input part 206 that inputs signals for operating the receiving machines; a timer processing part 207 that performs timer processing; and a data allocation part 208 that allocates received data to the storage area. The storage area 204 comprises a storage management information holding part 2041 and a contents holding part 2042.

There may be plural receiving parts 201, communication parts 202, data processing parts 203, data display parts 205, and data input parts 206. The receiving part may not exist in a particular terminal if data received via the communication part 202 from other device including a receiving part is received in the terminal. Likewise, at least one of the data display part 205, the data input part 206, and the timer processing part 207 may be included in other devices to input and output data via the communication part 202. The storage area 204 may comprise one or more devices.

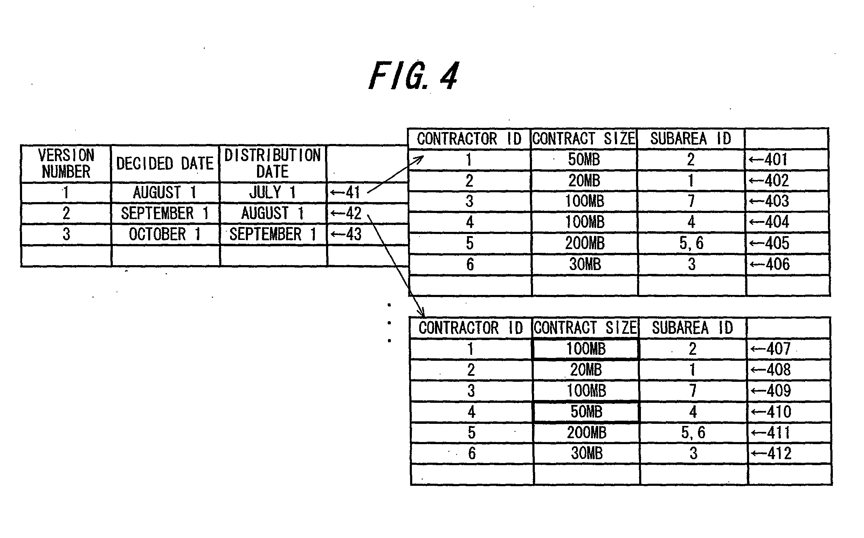

The following describes major information held in the data transmitting apparatus. FIG. 3 shows the contents of receiving machine management information held in the terminal management information holding part 1031 of the database part 103 of the data transmitting apparatus in FIG. 1. The receiving machine management information includes terminal IDs uniquely assigned to all receiving machines, terminal types, the latest dates when the respective receiving machines acquired storage management information, and the version numbers (version numbers in FIG. 4) of storage information acquired at that time. A terminal type is not always necessary. Either of storage management information acquisition date and acquisition version is not always necessary.

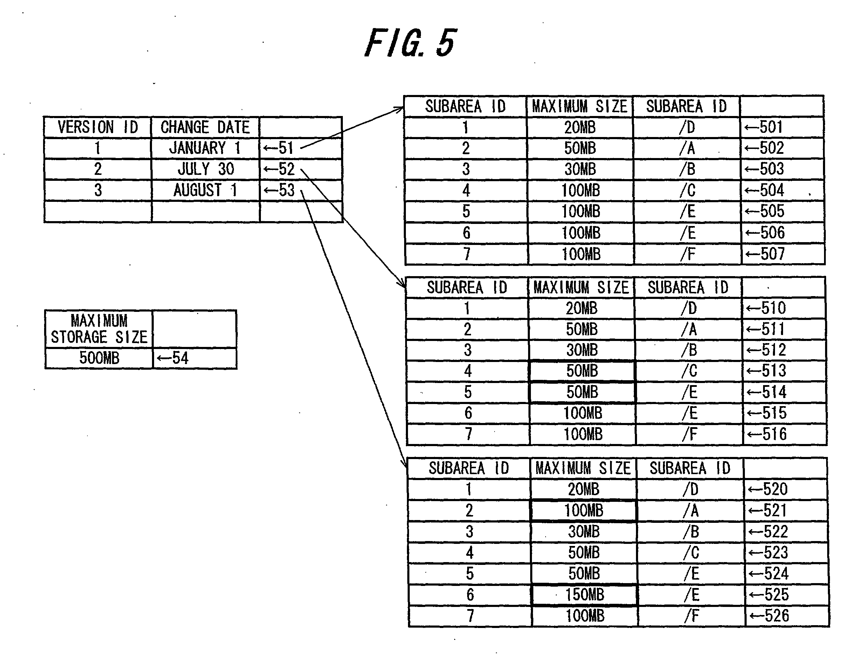

FIGS. 4 and 5 show the contents of storage management information (contract information and subarea management information) for managing storage states of receiving machine storage areas held in the storage management information holding part 1032 of the database part 103 in FIG. 1. The contract information is managed in the data transmitting apparatus and transmitted to the receiving machines for checking therein. The subarea management information is managed only in the data transmitting apparatus.

FIG. 4 shows contract information of storage management information that, for each agency, gives a maximum size available to store contents data of the agency, of the storage capacity of a receiving machine. Changes of contract contents yield plural versions. For each version, a decided date and a distribution start date are assigned. A decided date, inputted by an operator via the data input part 101, is a date when a contract size of the version is decided. A distribution start date is a date determined by the storage management part 107 from a decided date so that contract information of the version is distributed to all receiving machines to enable operation at a specified decided date. That is, a period from a distribution start date to a decided date is a transition period during which the contract information is passed to all receiving machines. The contract information includes a contractor ID assigned to each of contract agencies, contract size, and a subarea ID indicating a subarea, which is a storage destination in the data transmitting apparatus. The sum of contract sizes of all contractors is set so that a size (maximum storage size indicated by 54 of FIG. 5) usable for contents data of the storage capacity of the receiving machine is not exceeded. The checking is performed in the storage management part 107 when contract information is inputted from the data input part 101.

The contract information is a unit in which the receiving machine classifies contents data and checks the size of contents data, and a contract ID is a classification number uniquely identifying the classification.

FIG. 5 shows subarea management information of storage management information that is used to manage subareas. Subareas are provided to split a maximum storage size of a receiving machine for the purpose of management and each subarea has a maximum size. One agency that contracts to split a storage area of the receiving machine into plural subareas for the purpose of management are allocated one or more subareas according to the contract contents, and can create contents data within maximum sizes of the allocated subareas. The subarea management information manages a maximum size of each subarea. The data transmitting apparatus transmits contents data to store it in the receiving machine in units of subareas. The data transmitting apparatus does not distribute subarea management information to the receiving machine. Although the subsequent description assumes that one contents is stored in one subarea, plural contents may be stored in one subarea. That is, in this example, in the receiving machine, one contents is stored in a storage area as a storage unit.

A contents creator must create contents to fit them in a maximum size of a subarea. Plural versions of subarea management information are produced in accordance with changes of maximum size of subarea. For each version, a change date indicating a date when the version takes effect is held. The subarea management information holds a subarea ID uniquely assigned to each subarea, maximum size of subarea, and position information indicating a directory path and the like within the data transmitting apparatus. If a directory path is uniquely assigned in units of subareas, a subarea ID is not always necessary. Since the sum of maximum sizes of all subareas is a maximum storage size of a receiving machine, usually, if contents are created within a maximum size of subarea, contents data to be stored does not overflow from the maximum storage size of the receiving machine even if the contents data is freely changed. The maximum storage size indicated by 54 of FIG. 5 is a maximum size available for the receiving machine to store contents data. A maximum size of subareas is equal to or less than the value indicated by 54 (500MB in this example).

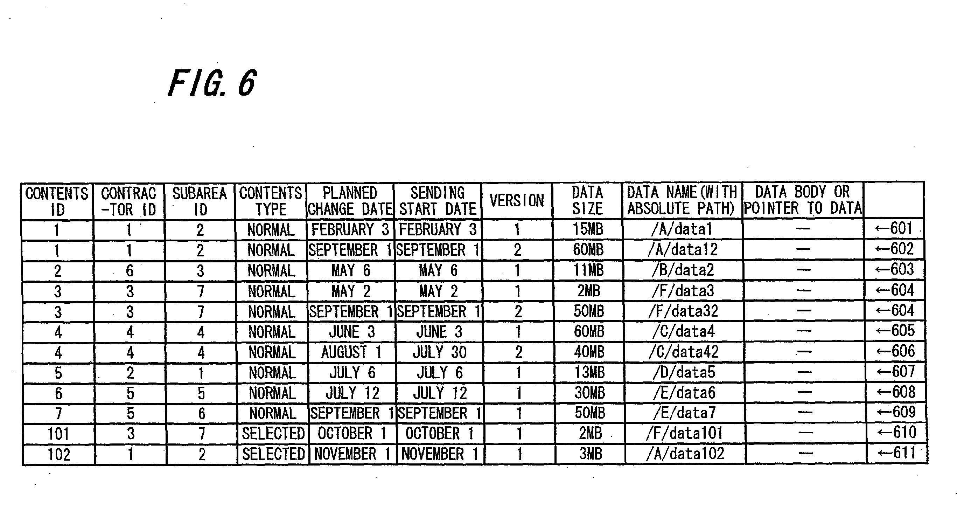

FIG. 6 shows the contents of contents management information held in the contents holding part 1033 of the database part 103 of the data transmitting apparatus. The contents management information holds: contents ID indicating an identification number of uniquely identifying contents; contractor ID indicating contents creator; ID of subarea in which the contents are stored; contents type indicating the type of the contents; planned change date when the contents are scheduled to be changed; distribution start date when the contents starts to be distributed; version incremented upon change of the contents; contents data size; data name; and pointer to contents data body or contents data. If the types of contents need not be differentiated, a contents type is not always necessary. A data size will not exceed a maximum size of a subarea indicated by a subarea ID. A planned change date is a value inputted by an operator, and a distribution start date is decided by the storage management part 107 from a planned change date and the storage management information (see FIGS. 4 and 5).

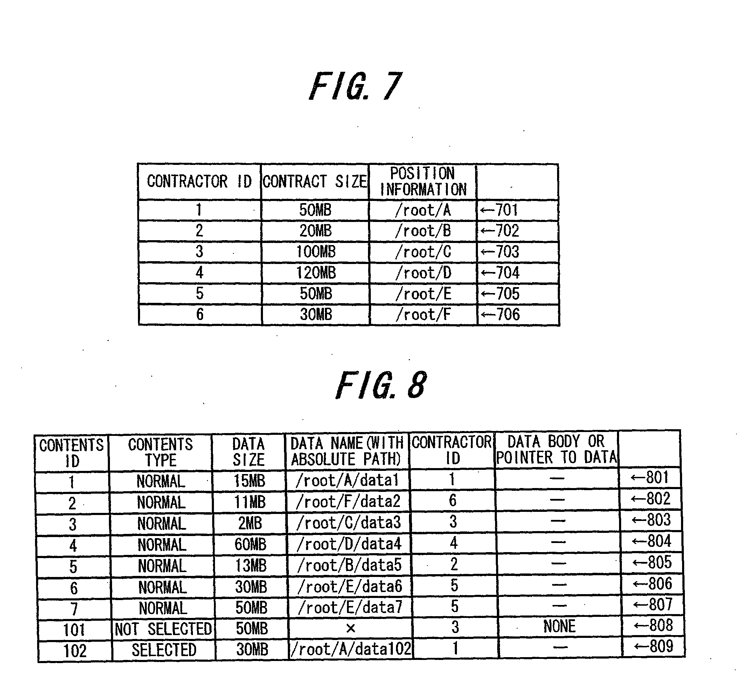

The following describes information held within a receiving machine. FIG. 7 shows an example of storage management information held in the storage management information holding part 2041 of the receiving machine 11. In the example, of storage management information managed by the data transmitting apparatus, only one version to be currently used is held. The storage management information holds contractor IDs, contract sizes, and information of position in the receiving machine. Information of position in the receiving machine is decided by the data allocation part 208 of the receiving machine when information about a new contractor ID is received.

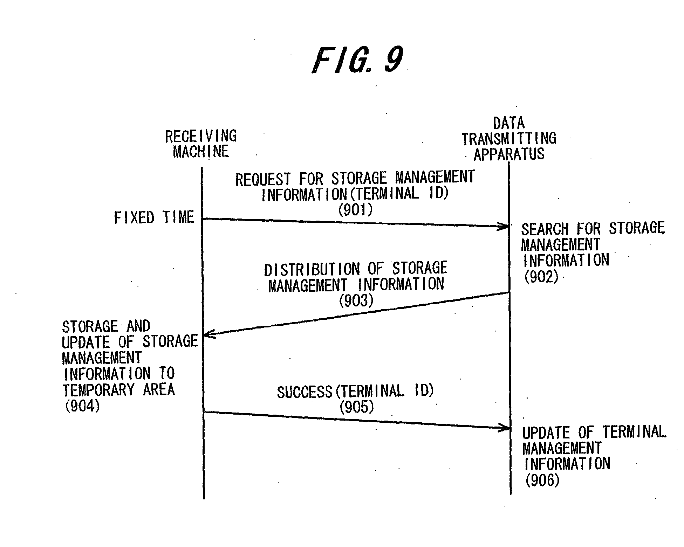

FIG. 8 shows an example of a list of contents held in the contents holding part 2042 of the receiving machine 11. In the example, of contents managed by the data transmitting apparatus, only one version to be currently used for one contents ID is held. The contents list holds contents IDs, contents types, data sizes, data names, contractor IDs, and pointers to contents data body or contents data. If there are no types in contents, contents types may not be provided. The following describes the transmitting of storage management information from the data transmitting apparatus to the receiving machine. FIG. 9 is a flowchart for explaining exchange of storage management information between the data transmitting apparatus and the receiving machine. The receiving machine acquires storage management information from the data transmitting apparatus over a communication line periodically at a specified interval. When a time set in the timer processing part 207 is reached, the receiving machine issues a request to acquire storage management information to the data transmitting apparatus over a communication line (901). The acquisition request contains a terminal ID assigned to each receiving machine. Upon receipt of the acquisition request in the communication part 106, the data transmitting apparatus 10 notifies the storage management part 107 of the event to via the terminal management part 104. The storage management part 107 searches for contract information (FIG. 4) of the storage management information holding part 1032, the version of which has the latest distribution start date, of versions having a current time in or after a distribution start date (902).

Next, the data transmitting apparatus distributes a list of contractor IDs and contract sizes as contract information of storage management information to the receiving machine via the terminal management part 104 and the communication part 106 (903). Upon receipt of the contract information, the receiving machine updates storage management information (FIG. 7) of the storage management information holding part 2041 to new contract information in the data allocation part 208 (904). The data allocation part 208, for contractor IDs with contract sizes changed, checks whether the sum of data sizes of contents of the contractor IDs is within a contract size, and for a new contract ID, decides position information within the receiving machine. If the data allocation part 208 successfully updates the storage management information, the receiving machine notifies the data transmitting apparatus 10 of update success via the communication part 202 (905). When the data transmitting apparatus receives the success notification in the communication part 106, terminal management part 104 searches terminal management information (FIG. 3) for a pertinent terminal ID to update a storage management information acquisition date and a storage management information acquisition version (906). These operations are periodically repeated.

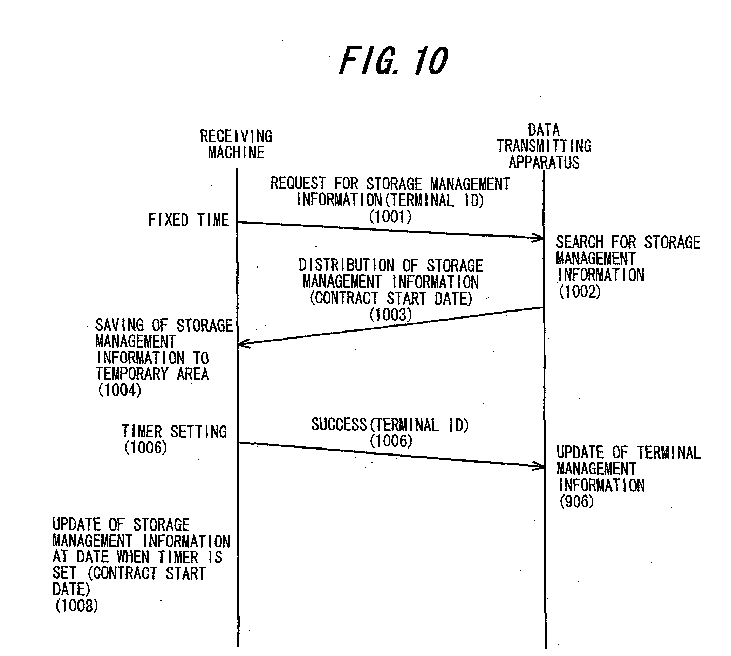

This is a first example. As a second example, storage management information is distributed from the data transmitting apparatus to a receiving machine with specification of a date when the storage management information takes effect, and when the date is reached, switching to the new storage management information is performed in the receiving machine. FIG. 10 is a flowchart for exchanging storage management information in the second example. As in the example of FIG. 9, a receiving machine requests storage management information at regular times (1001) and the data transmitting apparatus searches for contract information of storage management information (1002). The data transmitting apparatus distributes the storage management information to the receiving machine along with a decided date of contract information of FIG. 4 (1003). The data allocation part 208 of the receiving machine saves the received storage management information to a temporary area, and for a new contract ID, decides position information within the receiving machine (1004).

The timer processing part 207 sets timer to update to new storage management information at the decided date (1005). The receiving machine notifies the data transmitting apparatus of success in the timer setting via the communication part 202 (1006). When the data transmitting apparatus receives success notification in the communication part 106, the terminal management part 104 searches terminal management information (FIG. 3) for a pertinent terminal ID to update a storage management information acquisition date and a storage management information acquisition version (1007). When the date set in step 1005 is reached, the timer processing part 207 notifies the data allocation part 208 of setting contents. The data allocation part 208, for contractor IDs with contract sizes changed, checks whether the sum of data sizes of contents of the contractor IDs is within a contract size, and overwrites the storage management information saved in the temporary area in step 1004 to the storage management information holding part 2041 (1008).

As another example, versions of the contract information (FIG. 4) are assigned for each contractor ID instead of being assigned for whole contract information so that the whole contract information is not transmitted but only changed contract information is transmitted.

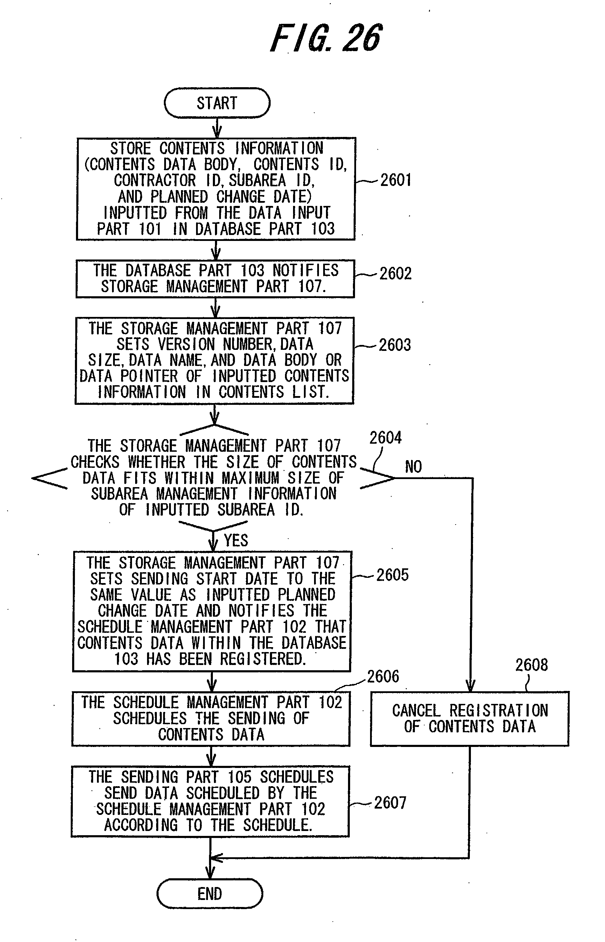

Input and transmitting of normal contents data from the data transmitting apparatus 10 is described using the flowchart of FIG. 26. The data transmitting apparatus saves contents data to be transmitted from the data input part 101 to the contents holding part 1033 of the database part 103 (2601). The contents data is inputted along with a contents data body by specifying contents ID, contractor ID, subarea ID, and planned change date, as shown in FIG. 6. The database part 103 notifies the storage management part 107 that the contents data has been inputted (2602). The storage management part 107 sets a version number, data size, and data name of the contents data, and pointer to data body or data in the contents list (2603).

The storage management part 107 sees storage management information (FIGS. 4 and 5) in the storage management information holding part 1032 to check whether the size of the inputted contents fits in maximum sizes of the subarea management information in and after a planned change date (2604). If the size of the inputted contents is not within maximum sizes of the subarea management information in and after the planned change date, a warning is issued and a date when the contents data will be stored in a subarea is set, or an error is issued to discontinue registration of the contents data (2608). If the size of the inputted contents fits in maximum sizes of the subarea management information, the storage management part 107 sets the same value as the planned change date as a transmitting start date and formally registers the contents data, and notifies the schedule management part 102 of the fact (2605). The schedule management part 102 decides when to transmit the contents data and makes a schedule (2606). The transmitting part 105, according to the schedule made by the schedule management part 102, transmits data to the receiving machine 11 (2607).

The receiving machine 11 receives the contents data in the receiving part 201. The received contents data is overwritten to the contents list by the data allocation part 208 if the received contents ID already exists in the contents list, and otherwise is added to the contents list. Thus, the contents data is stored in the contents holding part 2042 of the storage area 204 as shown in FIG. 8. At this time, the data allocation part 208 uses a contractor ID indicated by the contents information to obtain a contract size of storage management information of FIG. 7 and checks whether a total data size of all contents having the contractor ID fits in the contract size.

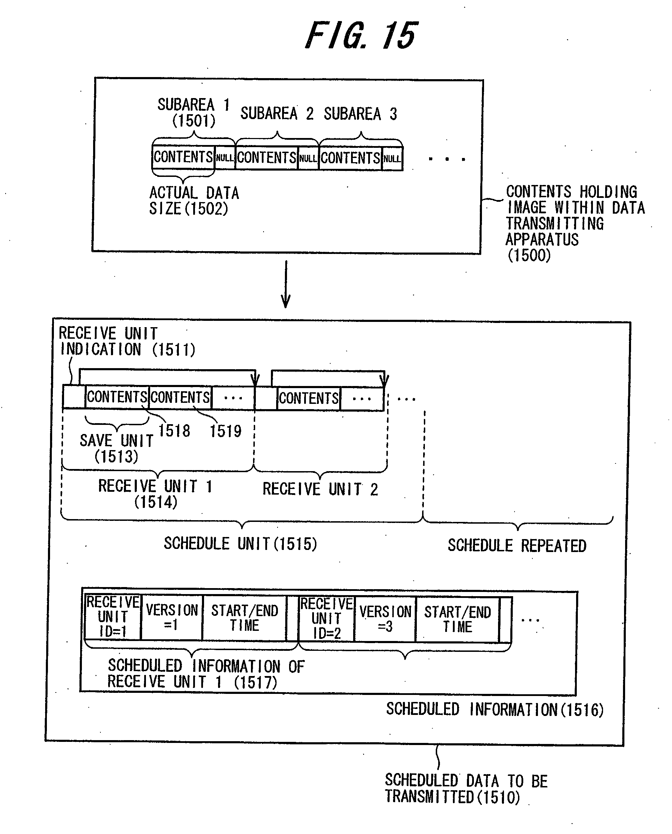

Referring to FIG. 15, a description will be made of a relationship between a contents holding state in the data transmitting apparatus, and transmitting data produced as a result of scheduling the distribution of contents data by the schedule management part 102. The reference numeral 1500 of FIG. 15 designates an image of a contents holding state in the data transmitting apparatus. The data transmitting apparatus manages contents to be transmitted in maximum sizes of subareas so as to fit in a maximum storage size of receiving machines. The schedule management part 102 targets only actual contents data size of a subarea 1 (1501) in the drawing for transmitting.

The reference numeral 1510 in the drawing shows scheduled transmitting data. A receive unit of the receiving machine consists of one or more contents. A starting part of transmitting data contains a start indication of one receive unit and a pointer to an end position of the receive unit (1511). There is a schedule unit (1515) containing all contents and the schedule management part 102 performs scheduling to repeatedly transmit the schedule unit.

The receiving machine does not receive only one portion of a receive unit, e.g., from a midway point of the receive unit. The data transmitting apparatus cannot know from which receive unit in one schedule unit the acquisition of contents data is started, or which receive unit is missed, depending on the timing in which power to the receiving machine is turned on, or other timings. Although a receive unit of the receiving machine consists of plural contents, a storage unit, which is an update unit of the contents holding part 2042, is a contents unit (1513). Basically, changed contents are placed in a first receive unit placed (same receive unit ID) by the schedule management part 102.

The reference numeral 1516 in the drawing designates schedule information produced as a result of scheduling by the schedule management part. For each receive unit, information such as a receive unit ID, a version, and broadcast time is set. If any contents data in a receive unit is changed after previous transmitting, the schedule management part 102 increments by 1 a version number of the receive unit. If the data transmitting apparatus transmits the schedule information in advance, the receiving machine judges, in the data processing part 203, what version of which receive unit is to be broadcast from what time, makes, in the data allocation part 208, a storage plan to store contents data from a specified time only when its version is different from those held by it, and sets timer in the timer processing part 207 to store the contents data.

In this way, contents data can be stored according to contract sizes of plural agencies. By splitting a maximum size of the receiving machine to plural sizes for management as a collection of subareas, contents can be freely changed within a maximum size of a subarea.

### (Second embodiment)

Second embodiment is configured as shown in FIG. 1, as in the first embodiment. In the second embodiment, a description will be made of an example of management of contract sizes increased or decreased when contract information in storage management information is changed due to changes in contracts of agencies.

The following describes a case where a contract change of an agency decreases a contract size of storage management information of the agency. Although contents data to be transmitted must be decreased according to the decrease of the contract size, if storage management information of the decreased contract size is received in the receiving machine before receiving and storing the decreased contents data, it is determined that the contents data cannot fit within the contract size of the agency during checking in the receiving machine whether a total size of the contents data fits within the contract size, with the result that an error occurs in the receiving machine. If the checking is not performed in the receiving machine, a maximum storage size of the receiving machine may be exceeded and contents storage of other agencies may be badly affected.

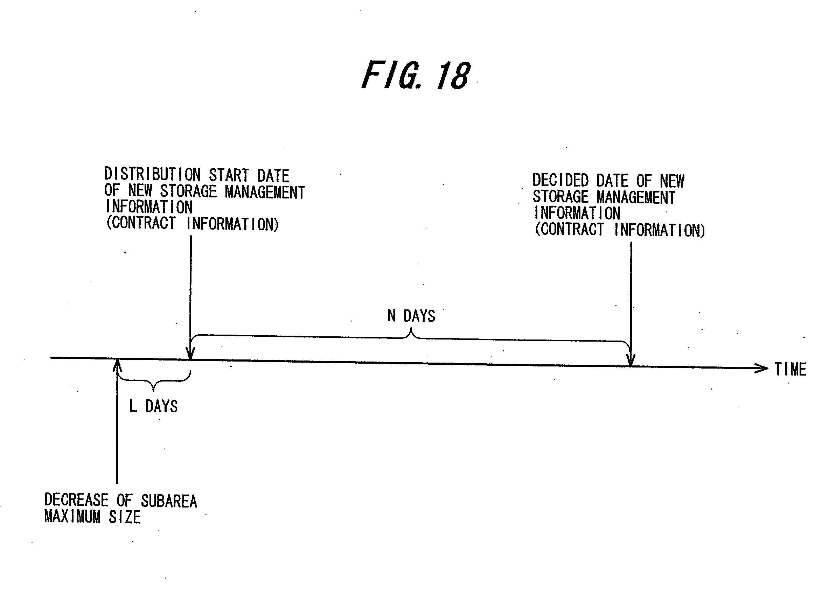

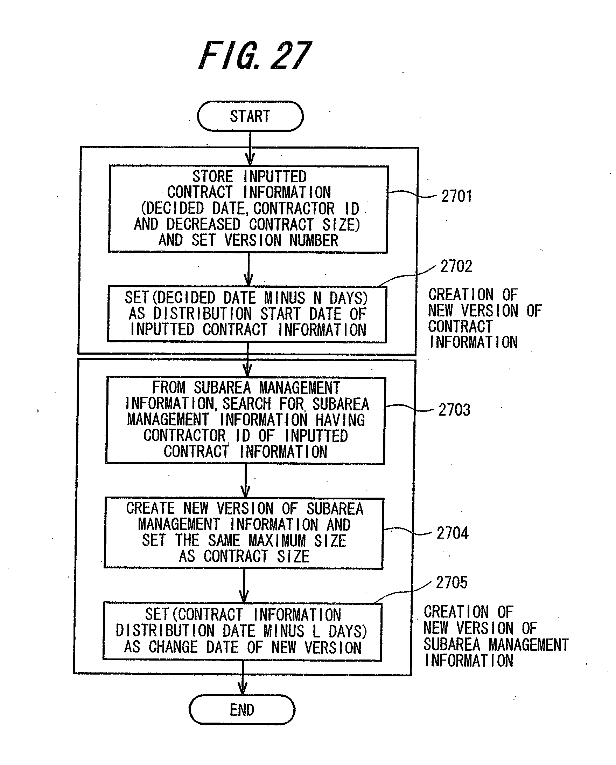

To prevent such a situation, a description will be made of an example of how the present invention is implemented for a decrease in contract size. FIG. 18 shows an example of scheduling when a contract size is decreased. FIG. 27 is a flowchart of processing performed when a contact size is decreased. The description will be made using an example that contract information of version 2 (42) of decided date September 1 of FIG. 4 is inputted.

In contract information of version 2 indicated by 42 of FIG. 4, contractor ID of 4 decreasing from 100MB to 50MB in contract size in comparison with contract information of the previous version 1 is used as an example. Contract information with decided date September 1, contract ID 4, and contract size 50MB is inputted from the data input part 101 of the data transmitting apparatus 10 as a change indication (2701). The storage management part 107 is notified that the data input part 101 has stored the inputted information in the storage management information holding part 1032 of the database part 103. The storage management part 107 sets a version number to 2 (2701). The storage management part 107 subtracts N (31 days in the example) from the decided date September 1 and decides a distribution start date of the contract information of version 2 as August 1 (2702).

N is, as described previously, a transition period for distributing the new version to all receiving machines until the decided date. N is inputted in advance as an operation value from the data input part 101. Or as described in FIG. 9 in the first embodiment, by managing storage management information acquisition versions of the terminal management information of FIG. 3, the storage management part 107 periodically checks the storage management information acquisition versions of FIG. 3 and distribution start dates of FIG. 4 and may dynamically set a value of N by calculating the number of days during which 90% (a value set in the data input part 101) of all receiving machines have acquired one version, beginning from a distribution start date.

At this point, as subarea management information, only version 1 of 51 of FIG. 5 exists. Herein, as described previously, before contract sizes are decreased from August 1, the maximum sizes of the subarea management information and contents data sizes must have been decreased. As the number of days until the maximum size of the subarea management information must be decreased before the contract sizes are decreased, an operation value L days (two days herein) are inputted from the data input part 101. L designates a period until all receiving machines can receive and store contents data after distribution of the contents data.

The storage management part 107 searches for a subarea, using a contractor ID of 4 indicated by 410 (2703). Since the maximum size of subarea having a subarea ID of 4 of version 1 exceeds the contract size (504 of FIG. 5), the storage management part 107 issues a warning and prompts creating a new version of subarea management information and a new version of contents. Or at the same time as the issuance of a warning, the storage management part 107 automatically a new version of subarea management information and sets a maximum size equal to a contract size of the new version of subarea management information (2704), and sets a change date to L days before the distribution start date of contract information (2705). When the change date is reached, if contents data does not fit within the maximum size of the subarea management information, null data of data size 0 may be forcibly created.

In this way, a distribution plan is made as in FIG. 18. That is, N days before a decided date when a decrease in contract size is decided, the distribution of storage management information describing the contract size decrease is started, and N+L days before the decided date, a maximum size of a subarea having a contractor ID to decrease in contract size is decreased.

It is after the decided date (September 1) of FIG. 4 that the decrease amount of the contract size (a decrease in the maximum size of subarea) can be used as a contract size of other contractors. This will also be described in the following description of an increase in contract size.

The following describes a case where a contract change of an agency increases a contract size of storage management information of the agency. Although contents data to be transmitted is increased according to the increase of the contract size, unless the receiving machine acquires and stores storage management information describing the contract size increase before receiving increased contents data, an error will occur in checking performed by the data allocation part 208 of the receiving machine when the contents data is stored, because the contents data does not fit within the contract size. In contract information of version 2 indicated by 42 of FIG. 4, contractor ID of 1 (407) decreasing from 50MB to 100MB in contract size in comparison with contract information of the previous version 1 is used as an example.

Contract information with contract ID 1, contract size 100MB, subarea ID 2, and decided date September 1 is inputted from the data input part 101 of the data transmitting apparatus 10 as a contract information change indication. The storage management part 107 is notified that the data input part 101 has stored the inputted information in the storage management information holding part 1032 of the database part 103. The storage management part 107 checks that an increase amount of the contract size (an increase amount of the maximum size of subarea) is within a size not used by other contractors and subareas, of the maximum storage size (54 of FIG. 5) in the receiving machine. This is explained using the example. Suppose contract size of contractor ID 4 in version 2 (42) of the contract information of FIG. 4 is to be decided at decided date August 1 and the subarea management information of FIG. 5 has version 2 (52). An extra area size in and after the inputted decided date September 1 is a value 50MB resulting from subtraction of the sum of contract sizes (20, 100, 50, 200, 30MB) of version 2 of contractor IDs 2, 3, 4, 5, and 6, and contract size (50MB) of version 1 of contractor ID 1 from the maximum storage size 54 (500MB). Since an increase amount of the contract size of contractor ID 1 currently inputted is just 50MB (100MB - 50MB), the checking on an increased size in the storage management part 107 passes without problem. When a contract size is increased, a maximum size of subarea and contents data size before the increase always fit within a contract size, the storage management part 107 does not check whether the maximum size of subarea fits within a contract size of new contract information.

By changing contract information as described above, if all receiving machines can acquire new storage management information according to the procedure of FIG. 9 described previously within N days of a transition period, no error will occur in checking performed in the data allocation part 208 of the receiving machines when a contract size of the contract information is decreased or increased, to determine whether contents data of an associated agency fits within the contract size.

In the case of a procedure of FIG. 10, since a receiving machine sets timer and updates storage management information at a decided date as described previously, when a contract size is decreased, scheduling does not need to be performed to decrease a maximum size of subarea by the number of bytes corresponding to a decrease amount (N+L) days before the decided date. The distribution of subarea management information on a decrease in a maximum size of subarea is started L days before a decided date, and the distribution of subarea management information on an increase in a maximum size of subarea is started at the decided date. Thus, L days may be provided as a transition period.

The following describes a case where some receiving machines could not acquire new storage management information within N days after a distribution start date. In this case, if contents data were acquired in a current state, contents data larger than contact sizes of old storage management information held in the receiving machines might be received. The present invention provides a method of detecting receiving machines that could not new storage management information within N days, to prevent storage area overflow. This method will be described using an example that, in the exchange processing of FIG. 9, terminal ID 4 of FIG. 3 issues a request to acquire storage management information shown in FIGS. 4 and 5 at September 3.

A receiving machine of terminal ID 4 issues a storage management information request 901. The storage management part 107 of the data transmitting apparatus, before searching storage management information (902), obtains from terminal management information (FIG. 3) a date when the terminal ID 4 acquired storage management information previously. Upon recognizing that a current date already passed a decided date of version 2 (42 of FIG. 4) of contract information, the storage management part 107 searches the contents list for contents of contractor ID 4 decreasing in contract size and distributes storage management information provided with a contents data delete instruction containing the obtained contents ID 4 to a receiving machine of terminal ID 4 (903). Upon receiving the delete instruction specifying the contents ID 4 to be deleted, the receiving machine retrieves contents data 605 and 606 from the contents list of FIG. 6 and deletes the contents data, and then executes the step (904) of storing and updating storage management information and subsequent steps as usual.

Although, in this example, contents data of contractor ID decreasing in contract size is deleted before a storage area overflow occurs, an alternative method may be taken. That is, after a storage area overflow occurs, the receiving machines detect the overflow in the data allocation part 208 and notify the data transmitting apparatus 10 of the overflow over a communication line, whereby the storage management part 107 of the data transmitting apparatus issues an instruction to delete contents of a contractor ID decreasing in contract size according to the same procedure as described above. The receiving machines themselves may detect that storage management information could not be acquired during a period, and take action for it.

As described above, when a contract size is changed, the data transmitting apparatus decides a distribution start date of contract information having the changed contract size and changes a maximum size of a corresponding subarea and manages change dates of contents data, thereby minimizing the occurrence of mismatch between the contract size and the contents data size. Should the receiving machines fail in acquiring storage management information within a period assumed by the data transmitting apparatus, before or after a storage area overflow occurs, contents data that may cause the overflow can be deleted from storage areas of the receiving machines.

### (Third embodiment)

A third embodiment is configured as shown in FIG. 1 like the first embodiment. In the third embodiment, referring to FIGS. 4 and 5, a description is made of storage management for preventing storage areas of the receiving machines from overflowing upon change of maximum sizes (maximum sizes of contents) of subareas.

Assume that one contractor ID has plural subareas like the contract state of contractor ID 5. Without changing the contract size, for convenience of contents data creation, a maximum size of one subarea may be increased and a maximum size of another subarea may be decreased by an increase amount. If the decrease and increase of maximum sizes are made at the same time and the data transmitting apparatus transmits contents data according to the decreased or increased sizes, the receiving machine may acquire and store contents data increasing in size before receiving contents data decreasing in size. This will result in an error during checking in the receiving machines to see if content data sizes fit within contract sizes, for the reason that the total amount of contents data overflows from the contract sizes. If the receiving machines do not perform checking to see if content data sizes fit within contract sizes, contents data may overflow from a maximum size usable for storing contents data, badly affecting storage of contents data of other agencies. An example of the present invention for preventing this situation, a description will be made of a method of arranging contents within one receive unit in FIG. 15.

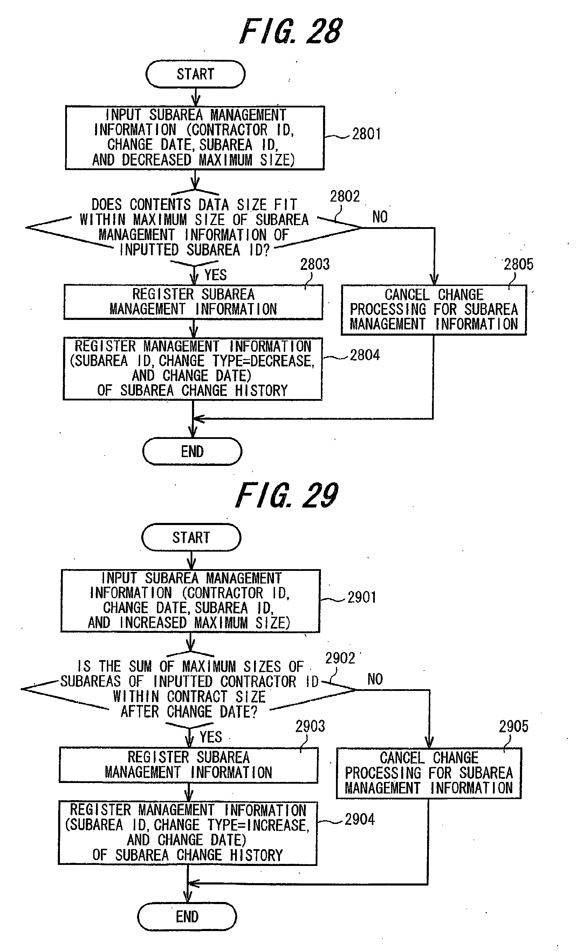

As described previously in FIG. 15, the receiving machines receive plural contents scheduled by the schedule management part 102 as a receive unit. Therefore, by placing delete indication data containing the contents ID of contents data to be deleted or contents decreasing in size at the beginning of a receive unit containing increased or decreased contents to transmit the receive unit, increased contents data or added contents data can be neither received nor stored without acquiring and storing the delete indication data or decreased contents data and obtaining a storage capacity resulting from the decrease. This will be described using FIG. 15. The schedule management part 102 of the data transmitting apparatus schedules transmit data so as to include delete indication data or decreased contents data in contents 1518, and increased contents data or added contents data in contents 1519. A flow of the processing will be described using flowcharts of FIGS. 28 and 29, assuming that a maximum size of subarea ID 5 of contractor ID 5 of FIG. 4 is decreased from 100MB to 50MB and a maximum size of subarea ID 6 is increased from 100MB to 150MB.

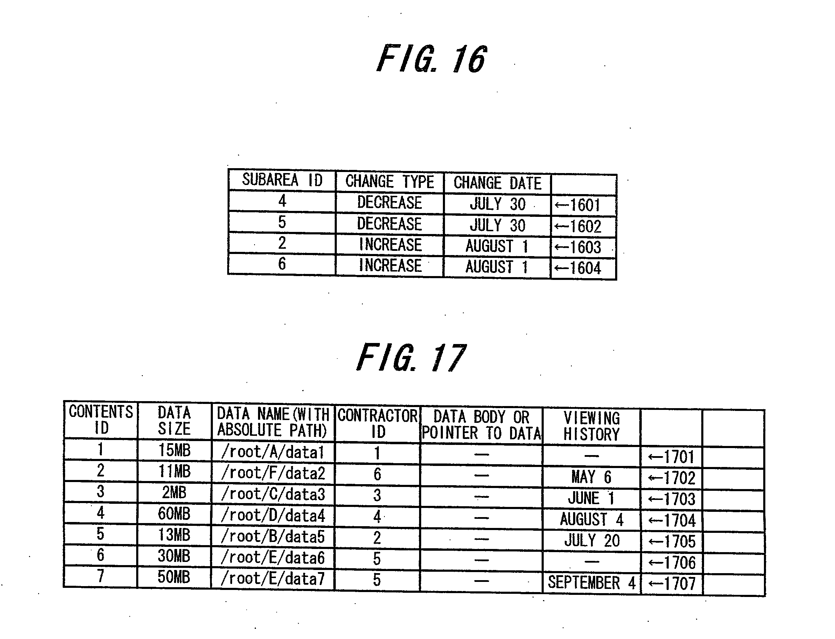

Information about a subarea change indication is inputted from the data input part 101 of the data transmitting apparatus. Information inputted here is contractor ID, subarea management information change date, subarea ID to be changed, and maximum size of subarea ID. When a maximum size is 0, a corresponding subarea is deleted. When an indication to decrease the maximum size of subarea ID 5 to 50MB from July 30 is inputted from the data input part 101 (2801), the indication information is held in the storage management information holding part 1032 of the database part 103 and is given to the storage management part 107. The storage management part 107 checks whether contents data size of contents ID 6 of subarea ID 5 fits within the decreased subarea size 50MB (2802), and registers the new size in an item of the subarea management information indicated by 514 of FIG. 5 (2803). At the same time, the storage management part 107 registers subarea ID 5, change type (decrease), and change date July 30 in subarea change history management information of FIG. 16 as history (2804). If the contents data size does not fit within the maximum size of the decreased subarea, change of the subarea management information is discontinued (2805).

When it is decided that a subarea decreases at July 30, the decrease size can be used as a size of other subareas from July 30. This will be described in subsequent increase processing.

Next, as an indication to increase subarea ID 6, when subarea ID 6, change date August 1, and maximum size 150MB are inputted from the data input part 101 (2901), the indication information is held in the storage management information holding part 1032 of the database part 103 and is given to the storage management part 107. The storage management part 107 checks whether a total size of subarea of contractor ID 5 having subarea ID 6 is within a contract size from August 1 (2902) and registers the new size in the subarea management information of FIG. 5 (2903). At the same time, it also registers history in the subarea change management information of FIG. 16 (2904).

Herein, assume that, as a placement condition indicating how old delete indication data or contents data decreasing in size before a current date is to be placed in the beginning of a receive unit, a deletion information period L days (three days) is set from the data input part 101 in advance as an operation value.

In such a subarea management state, when contents data of contents ID 7 having contractor ID 5 and subarea ID 6 is newly inputted from the data input part 101, the contents data is held in the contents holding part 1033 of the database part 103 and passed to the storage management part 107. The storage management part 107 checks that the contents data size is within a maximum size of subarea and registers the contents data (609 of FIG. 6). The storage management part 107 notifies the schedule management part 102 that contents ID 7 has been newly added. The schedule management part 102 retrieves from the subarea management information of FIG. 16 the subarea IDs 4 and 5 having been deleted within the above described deletion information period L days (three days), determines from FIG. 4 that subarea ID 5 has the same contractor ID 5 as contents ID 7, and puts the latest version (608 of FIG. 6) of contents ID 6 as contents data of subarea ID 5 in'the beginning of a receive unit to which contents ID 7 belongs, to create transmit data.

The receiving machines receives one receive unit in the order of contents IDs 6 and 7. The contents data of contents ID 6 is overwritten to the contents holding part 2042, the contents list of FIG. 8 is modified, and the contents data of contents ID 7 is newly added and added to the contents list of FIG. 8.

In this way, contents data that has the same contractor ID and was probably deleted or decreased within L days can be transmitted to the receiving machines without fail earlier than contents to be increased or added, and a space having a size equal to a decrease size is reserved within storage areas of the receiving machines before the contents data to be increased or added is stored, whereby a storage area overflow in the receiving machines can be prevented. As another method, the receiving machines may regularly (once a day) access the data transmitting apparatus over a communication line to acquire delete indication data or decreased contents data. Also, the data transmitting apparatus may broadcast deleted or decreased data as a receive unit that the receiving machines should acquire every day.

### (Fourth embodiment)

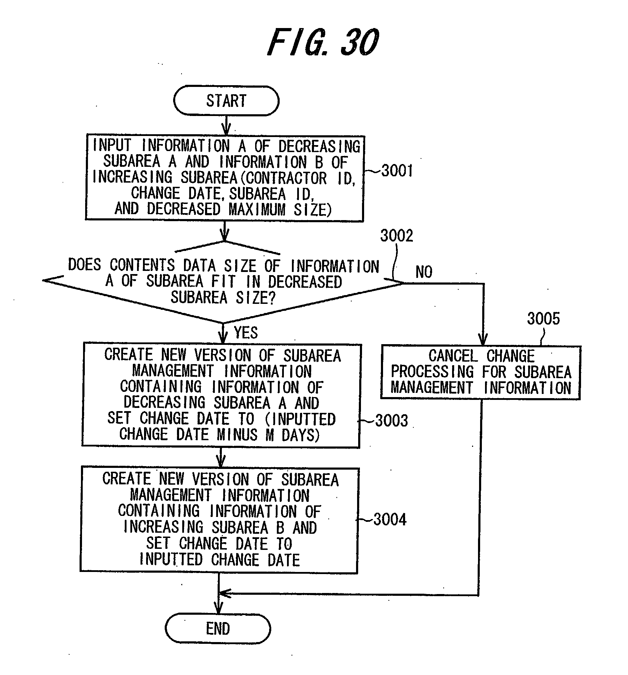

A fourth embodiment is configured as shown in FIG. 1 like the first embodiment. Another example different from the third embodiment will be described which, when maximum sizes of subareas are changed, prevents contents data from overflowing from contract sizes or maximum storage sizes of storage areas of the receiving machines. In this example, using different receive units, delete indication data or decreased content data, and added contents data or increased contents data are transmitted. A procedure for this processing will be described using a flowchart of FIG. 30.

Like the third embodiment, subarea management information is in a state indicated by 51 of FIG. 5, a maximum size of subarea having subarea ID 5 of contractor ID 5 is decreased, and a maximum size of subarea ID 6 is increased by the decrease size.

An indication to increase subarea ID 5 of contractor ID 5 from 100MB to 50MB and subarea ID 6 from 100MB to 150MB from August 1 is inputted to the data input part 101 (3001). The data input part makes registration to the database part 103, which makes notification to the storage management part 107. The storage management part 107 checks whether a contents data size of contents ID 6 of subarea ID 5 fits within the decreased subarea size 50MB (3002), creates version 2 (52 of FIG. 5) of subarea management information containing the decreased subarea ID 5, sets a change date to July 30, which is M days (M=2 in the example) before the specified August 1 (3003), and sets a maximum size of the subarea to 50MB (3003). M days are an operation value inputted in advance from the data input part 101. The storage management part 107 creates version 3 (53 of FIG. 5) containing subarea ID 6 increasing in maximum size, sets a change date to specified August 1, and sets a maximum size of the subarea to 150MB (3004).

By the above described arrangement, only contents of 50MB or less can be created in a subarea having a subarea ID of 5 after July 30. Since only contents up to 100MB can be created in a subarea having a subarea ID of 6 before August 1, a time lag of at least M days (two days) from the transmitting of decreased contents data to the transmitting of increased contents data can be provided, and the receiving machines receiving decreased contents data within M days (two days) before the data transmitting apparatus assumes can receive increased contents data without contents data sizes overflowing from contract sizes.

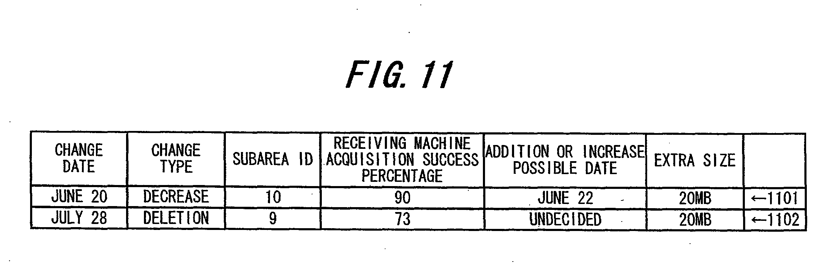

As a method of setting M days, assuming that delete data or decreased contents data is exchanged over communication, as shown in FIG. 11, if the storage management part 107 manages change dates when subarea are deleted or decreased, and receiving machine acquisition success percentage indicating what percentage of the receiving machines successfully acquired subsequently distributed contents data decreasing in size in the subareas, it is possible to add other subareas or increase maximum sizes of subareas when a certain condition is satisfied at a percentage of the receiving machines that succeeded in acquisition.

FIG. 11 shows an example of information for managing percentage of receiving machines that successfully acquired delete indication data or decreased contents data when contents data was deleted or decreased, because of deletion or maximum size decrease of subareas. The information consists of change date of subarea size, change type, subarea ID, percentage of receiving machines of all receiving machines that succeeded in acquisition, addition or increase possible date when size decrease amounts of subareas become usable as increased amounts in other subareas, and total amount of current extra sizes. Addition or increase possible date is a change date plus M days. Only when subareas are deleted or maximum sizes of subareas are decreased, each time contents data decreasing in size in the subareas is distributed over communication and success notification from the receiving machines arrives, the storage management part 107 updates acquisition percentage information indicating what percentage of all receiving machines succeeded in acquisition.

FIG. 11 shows an example that deleted or.decreased sizes become usable as added or increased sizes of subareas if acquisition success percentage is equal to or higher than 80%. Since acquisition success percentage exceeds 80% in 1101, (size of initial free space plus decreased size of subarea = 20MB) is managed as an extra size. Addition and increase of subareas can be performed within the extra size. In 1102, since an extra size cannot be obtained because of acquisition success percentage of 80% or less, an extra size of 1102 has the same value as the extra size of 1101. The extra size is referred to from the data input part 101 of FIG. 1 when maximum sizes of subarea management information are changed. Subarea addition or subarea size increase can be made up to the extra size.

Even if a subarea change order is managed as described above to transmit contents data, if the receiving machines acquired added contents data or increased contents data before acquiring delete indication data or decreased data for the reason that power to the receiving machines was off for M days, the receiving machines might be unable to store contents data within contract sizes. The following describes a restoration method of the present invention for the contents data overflow.

A receiving machine in which an overflow occurs notifies the data transmitting apparatus of the occurrence of the overflow. Upon receipt of the notification in the communication part 106, the data transmitting apparatus, in the storage management part 107, retrieves subarea IDs 2 and 6 recently increasing in maximum size from the subarea management information of FIG. 5. Further, it retrieves contents IDs 1 and 7 as contents of subarea IDs 2 and 6 from FIG. 6. The data transmitting apparatus distributes a delete instruction containing contents IDs 1 and 7 to the receiving machine in which the overflow occurred, via the terminal management part 104 and the communication part 106 from the storage management part 107. Upon receiving the delete instruction, the receiving machine retrieves contents IDs 1 and 7 from the contents list of FIG. 8 and deletes data bodies thereof and relevant information from the contents list.

Herein, instead of issuing the instruction to delete the contents increasing in subarea, an instruction to delete contents recently changed, regardless of an increase or decrease in subareas, may be issued. Instead of the data transmitting apparatus selecting deletion targets, the receiving machine may delete contents recently changed by keeping a contents change history.

The receiving machine may delete contents data to be received or stored upon overflow. All contents data having the same contractor ID as contents data received upon overflow may be deleted. All contents having the same information such as a directory name and additional information of other contents, as well as contractor IDs, may be deleted.

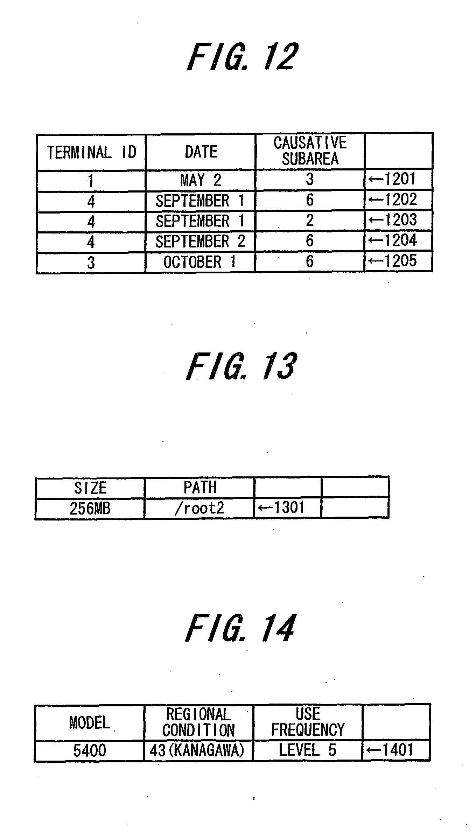

Furthermore, as shown in FIG. 12, the data transmitting apparatus keeps receiving machine overflow history information containing overflow terminal IDs and overflow cause such as subarea IDs 2 and 6 recently increasing in maximum size in the previous example, and if overflows occur more than Y times in one receiving machine for the same cause within a given period, a delete instruction may be issued to the receiving machine. Y is an operation value inputted from the data input part 101.

Or, as shown in FIG. 17, a viewing history is provided in a contents data list within a receiving machine so that, each time contents are displayed in the data display part 205 of the receiving machine, the data processing part 203 sets the date in a viewing history record of the displayed contents. When a storage area overflows in the receiving machine, the data allocation part 208 may precedently delete contents data having not been viewed for a long time. In the contents list of FIG. 17, 1702 having the oldest viewing history date is deleted earliest.

The above described arrangement makes difficult the occurrence of an overflow of contents data from contract sizes of storage areas of the receiving machine when maximum sizes of subareas are changed. Upon an overflow, appropriate contents to be deleted are deleted in the data transmitting apparatus or receiving machine to achieve rapid restoration.

### (Fifth embodiment)

A fifth embodiment is configured as shown in FIG. 1 like the first embodiment. In the fifth embodiment, a description will be made of an example that a deletion data list containing a list of contents data to be deleted is efficiently distributed and managed in a data broadcast system that gives an indication to delete contents data from storage areas over communication to receiving machines that are to perform storage.

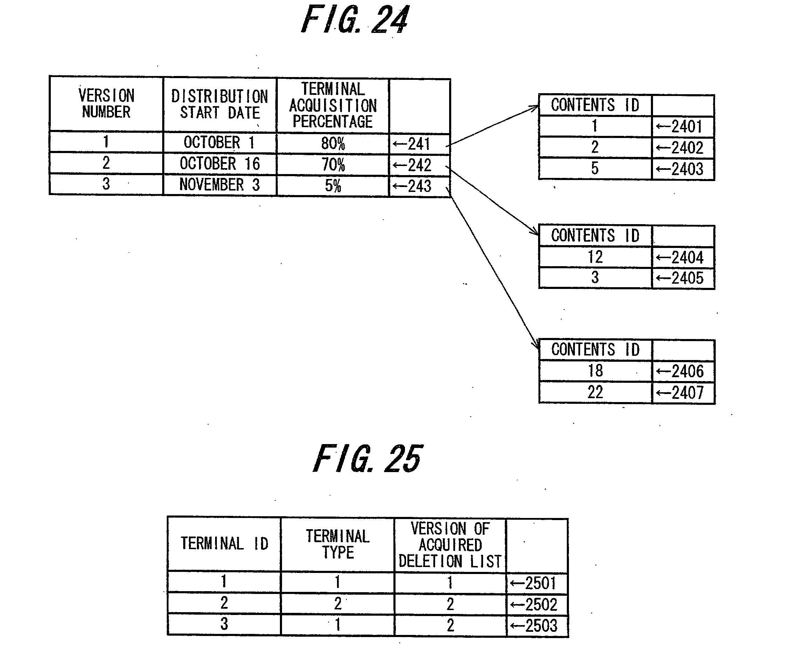

FIG. 24 shows management information of a deletion data list for specifying contents data to be deleted for receiving machines. This list is held in the storage management information holding part 1032 of the database part 103 of the data transmitting apparatus. The deletion data list management information is provided with version numbers, and each version is provided with a list of contents IDs to be deleted. A terminal acquisition percentage given for each version indicates what percentage of all terminals successfully acquired a deletion data list of the version. FIG. 25 shows terminal management information held in the terminal management information holding part 1031 of the database part 103 of the data transmitting apparatus. The terminal management information holds terminal IDs assigned uniquely to each of terminals and version numbers of deletion data lists successfully acquired by the terminals.

The receiving machines periodically issue their terminal ID and a deletion date list acquisition request to the data transmitting apparatus. The data transmitting apparatus, in the terminal management part 104 via the communication part 106, searches the terminal management information of FIG. 25 for the terminal ID. As a result of the search, the terminal management part 104 obtains the version of deletion data list already acquired in the terminal. The terminal management part 104 passes the terminal ID and the version of deletion data list already acquired to the storage management part 107. The storage management part 107 acquires a deletion data list having a version number greater than the version and having an expired distribution start date from FIG. 24, creates a list of contents IDs to be deleted, and distributes it to the receiving machines via the communication part 106. For example, when a deletion data list request comes from terminal ID 1 at November 4, since a version already acquired is "1" as indicated by 2501, deletion lists of versions 2 and 3, that is, a deletion data list of contents IDs 12, 3, 18, and 22 are returned to a receiving machine having a terminal ID of 1.

Upon receiving the deletion data list, the receiving machines delete contents data indicated by contents IDs from storage areas and notifies the data transmitting apparatus of deletion success over a communication line. Upon receiving the deletion success notification, the data transmitting apparatus, in the terminal management part 104, sets the value of version (2501) of deletion data list already acquired of terminal ID 1 of the terminal management information of FIG. 25 to 3, and in the storage management part 107, recalculates terminal acquisition percentages (242, 243) of versions 2 and 3 of FIG. 24 to modify them. If the acquisition percentage of a deletion data list of FIG. 24 becomes 100% or a predetermined value, the storage management part 107 deletes the version of the deletion data list. Herein, if the version of a deletion data list were deleted at 90% instead of 100% as terminal acquisition percentage, after the version is deleted, receiving machines having not issued an acquisition request for a long period of time might issue an acquisition request. For example, when the data transmitting apparatus holds only version 3 or later versions, receiving machines acquiring only version 1 may issue a request to acquire a deletion data list. In this case, in the procedure described previously, the storage management part 107 detects that version 2 is lacking during searching of deletion list versions of FIG. 24, and issues an instruction to delete all contents data to the receiving machines.

A deletion data list created for each terminal by the storage management part 107 may have been created in advance and held for each terminal, instead of being created upon a deletion data list acquisition request from the receiving machines. The versions of deletion data lists already acquired as shown in FIG. 25 may be held not in the data transmitting apparatus but in the storage management information holding part 2041 of the receiving machines so that the receiving machines pass a version number already acquired when issuing a deletion data list acquisition request, and the data transmitting apparatus passes deletion data lists of the version and later versions.

### (Sixth embodiment)

A sixth embodiment is configured as shown in FIG. 1 like the first embodiment. In the sixth embodiment, a description will be made of an example of the management of storage capacity of receiving machines in the case where the amounts of contents data to be stored are variable depending on the receiving machines, in a data broadcast system that transmits user-selected contents such as pay contents.

In the case where user-selected contents (selection type contents) such as pay contents are transmitted as the data broadcast system, it is difficult to manage capacity management in the data transmitting apparatus because variations in the amounts of contents data to be stored occur among the receiving machines - some receiving machines receive and store many contents but others store little. Therefore, as shown in FIG. 13, an area for selection type contents is reserved in advance in the storage management information holding part 1032 of the database part 103 of the data transmitting apparatus, and is stored in and managed with a maximum storage size of the receiving machines minus the size of the area for selection type contents. The storage management part 107 makes management so that a total size of subareas is equal to or less than a value obtained from subtracting the size of the area for selection type contents from the maximum storage size of the receiving machines. The value is inputted from the data input part 101. The storage management information holding part 2041 of the storage area of the receiving machines also manages the area for selection type contents of FIG. 13. The path of FIG. 13 in the receiving machines need not be the same as that in the storage management information holding part 1032 of the data transmitting apparatus.

Assume that the information of FIG. 13 is inputted from the data transmitting apparatus to the receiving machines along with storage management information. The receiving machines receives information about contents to be selected in the receiving part 201 and holds it in the contents list of FIG. 8 (808, 809). At this point, items such as data name, and data body or pointer to data do not exist because contents to be selected do not yet store a data body. The data display part 205 selects contents (contents IDs 101 and 102) to be selected and an operator selectively inputs contents (contents ID 102) from the input part 206. The data allocation part 208 passed the selected contents ID acquires the size of the selected contents and checks that the total size of selected selection type contents is equal to or less than the size of FIG. 13. If equal to or less than the size of FIG. 13, the data allocation part 208 stores the selected contents (contents ID 102) and changes items such as the contents type, data name, data body or pointer to data indicated by 809 of FIG. 8. Although this example assumes that area sizes of selection type contents data of the receiving machines are all the same, they may be different for each of receiving machine if the data transmitting apparatus manages an area for selection type contents of FIG. 13 for each of the receiving machines.

Although, in this example, the total amount of selection type contents is checked in the receiving machines, it may be checked in the data transmitting apparatus. In this case, the contents data is selected by a user having a receiving machine over a communication line by telephone, personal computer, or the like, all sizes of contents data selected for each'receiving machine are managed in the storage management part 107 of the data transmitting apparatus, it is checked whether (all sizes of selected contents data plus the size of contents data selected this time by the user) of the receiving machine is within the maximum size for selection type contents data of FIG. 13, and then the contents data is distributed to the receiving machine.

### (Seventh embodiment)

A seventh embodiment is configured as shown in FIG. 1 like the first embodiment. In the seventh embodiment, a description will be made of an example of an operation mode in which any of plural contents to be selected is decided depending on receive conditions appended to data to be transmitted. The receive conditions refer to regional conditions (Hokkaido, Kyushu, etc.) and conditions by models of receiving machines in the case where agencies having stores across the country transmit product information suited for regional climates. Any receive conditions may be used.

FIG. 14 shows an example of attribute information for each of receiving machines held in the storage management information holding part 2041 of the storage area 204 of the receiving machines. There are provided model attributes set in advance at the time of installation of receiving machines, regional condition attributes representative of regions such as Hokkaido, Kyushu, etc. that must be inputted by users through the input part 206 of the receiving machines at initial start, and attributes automatically set by the receiving machines such as use frequency. The attribute of the receiving machines corresponds to receive conditions appended to data transmitted by the data transmitting apparatus.

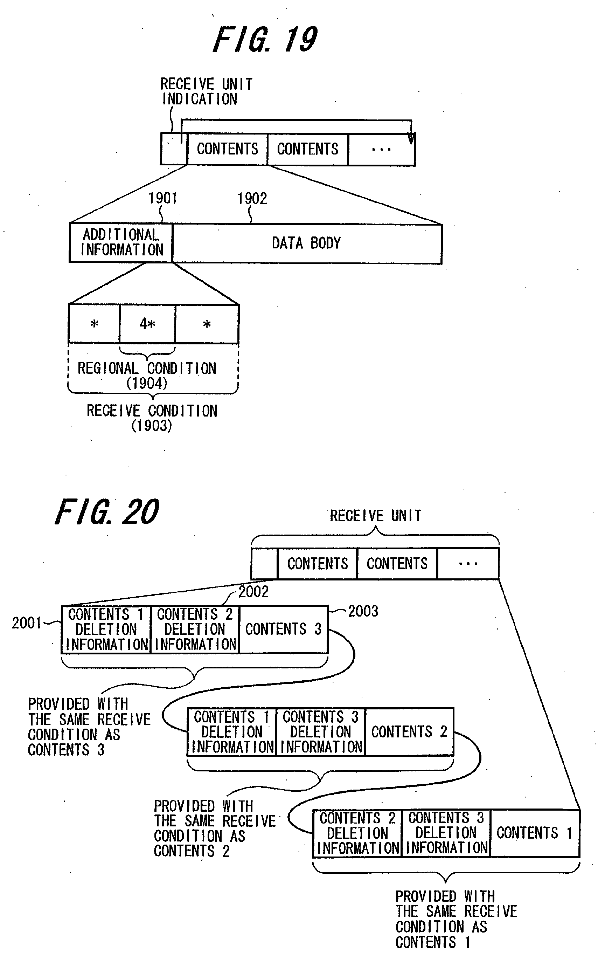

Receive conditions appended to contents transmitting data are inputted at the same time when contents are inputted from the data input part 101 of the data transmitting apparatus. The inputted contents data provided with the receive conditions is held in the contents holding part 1033 and is scheduled in the schedule management part 102 via the storage management part 107 as during normal data input. FIG. 19 shows an example of conditioned data transmitted by the data transmitting apparatus. One contents includes additional information 1901 and contents data body 1902. The additional information 1901 includes information such as body size, and receive conditions. In the drawing, of three types of conditions of FIG. 14, the condition that a region is Kanto (forties = Kanto) regardless of the models of receiving machines and use frequency is specified. Likewise, contents provided with the condition that a region is Kansai, or a region is Kyushu are transmitted. When the data transmitting apparatus transmits the data of FIG. 19 to the receiving machines via the transmitting part 105, the receiving machines having the attribute information of FIG. 14, upon receiving contents data, compare an attribute of their own and receive conditions appended to the contents in the data processing part 203, select contents data provided with the condition that a region is Kanto, store it in the data allocation part 208, and ignore contents data provided with the condition that a region is Kansai, or a region is Kyushu. In the case where none or one of grouped contents data is stored depending on receive conditions of each receiving machine as in this example, in order that the data transmitting apparatus makes management by the method described in the previous embodiment so that no storage area overflow occurs in the receiving machines, the respective subareas of the grouped contents data must be set to an identical maximum size or the largest maximum size in the group must be used for management.

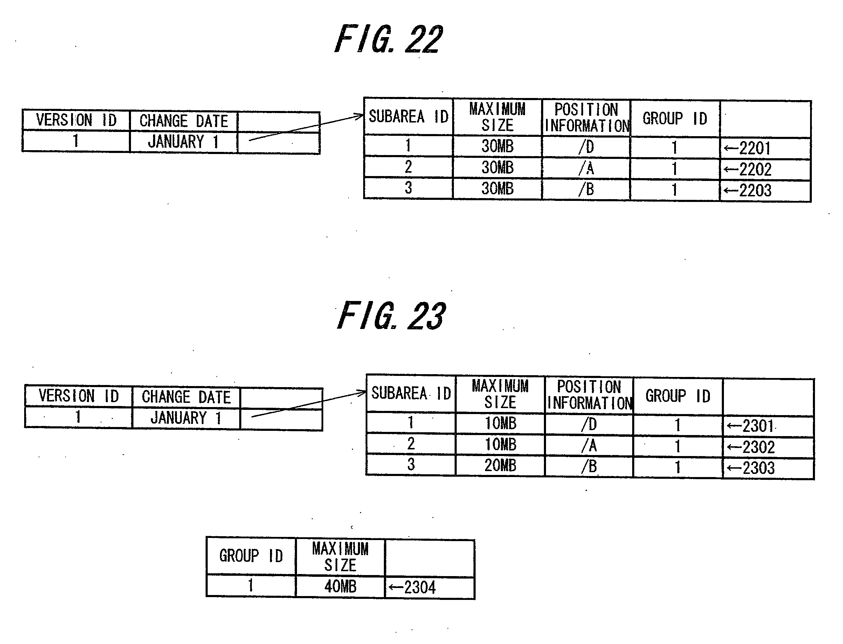

FIG. 22 shows an example of grouped subarea management information held in the data transmitting apparatus. As shown in FIG. 22, subarea management information is provided with a group ID. The group ID is inputted when subarea management information is inputted from the input part 101 of FIG. 1. When the storage management part 107 is notified that subarea information inputted by the data input part 101 is stored in the storage management information holding part 1032 of the database part 103, the storage management part 107 adds only one subarea maximum size for one group ID to the sum of subarea sizes even though there are plural subareas having an identical group ID, and checks whether the resulting sum is within a maximum storage size of the receiving machine. In the example of FIG. 22, since all subareas have an identical group ID, of the storage capacity of the receiving machine, a maximum storage size (54 of FIG. 5), which is a maximum size for storing contents data, may be 30MB or more.

If subarea information inputted from the data input part 101 is provided with an existing group ID, the storage management part 107 checks whether a subarea provided with the identical group ID has the same maximum size. If it is determined from the checking that it does not have the same maximum size, the storage management part 107 issues an error and does not register the inputted subarea.

There can be a system in which plural pieces of contents data are targeted for storage in the receiving machines, depending on receive conditions or attribute information. In this case, the sum of maximum sizes of grouped subareas must be managed in the data transmitting apparatus. FIG. 23 shows an example that group information is provided in combination with subarea management information. For each group ID, the sum of maximum sizes of subareas within the group is set. FIG. 23 shows that the sum of maximum sizes of subareas of group ID 1 is 40MB. When the storage management part 107 is notified that information of subarea of group ID 1 inputted from the data input part 101 is stored in the storage management information holding part 1032 of the database part 103, the storage management part 107 checks that the sum of maximum sizes of subareas of group ID 1 is within 40MB indicated by 2304. In FIG. 23, since the sum of maximum sizes indicated by 2301, 2302, and 2303 is 40MB, the information is normally registered as a result of the checking.

Next, a description will be made of an example that contents receive conditions or attributes in receiving machines may change. For example, a receive condition appended to contents is changed from "Kanto" to a prefectural unit, or attribute information of receiving machines is changed to "use frequency level of 3 or higher" so that other contents are targeted for storage. A description will be made of a method of, in such a case, deleting contents data having been acquired and stored in the receiving machines under previous receive conditions and attribute information.

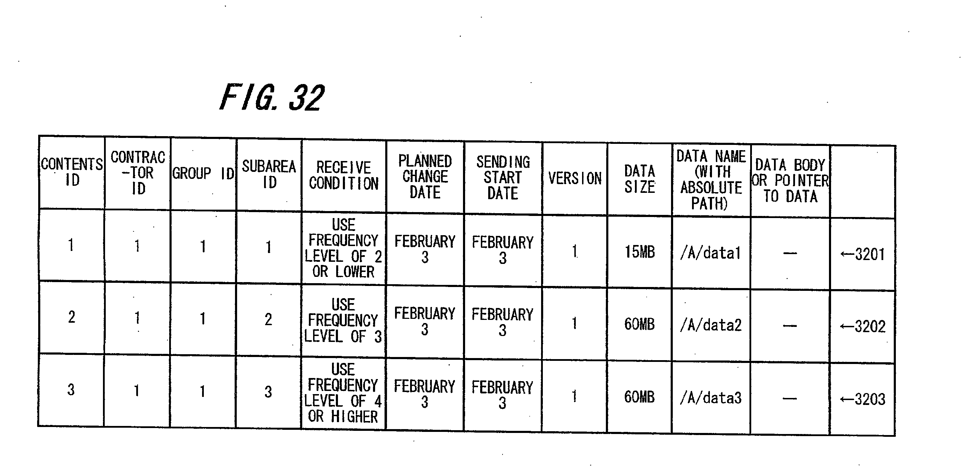

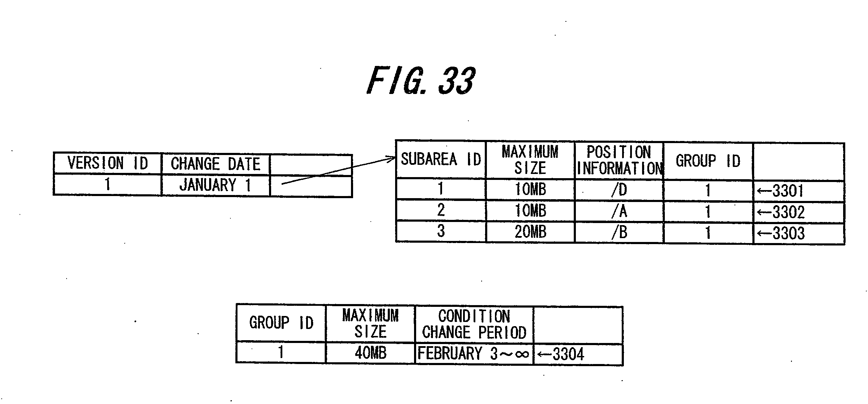

FIG. 32 shows an example of a list of contents having receive conditions. Contents 1, 2, and 3 belong to the same group and are assigned conditions "use frequency level of 2 or less", "use frequency level of 3", and "use frequency level of 4 or higher", respectively. FIG. 33 shows an example of subarea management information having group IDs and group information containing receive condition or attribute information to be changed. In the examples shown in FIGS. 32 and 33, in the case where the receiving machines having a use frequency level of 3 are storing contents 2 according to their attribute, when a use frequency level of the receiving machines becomes 4, contents 3 instead of contents 2 are to be received. This is an example of group ID 1 in which, if an attribute of the receiving machines changes even if receive conditions appended to contents data do not change, contents data to be received changes. 3304 of the group information of FIG. 33 indicates that a period during which receive conditions and attribute of group ID 1 are changed (that is, a period in which contents data having been acquired and stored in the receiving machines under previous receive conditions and attribute information is deleted) begins at February 3 and lasts until contents exist.

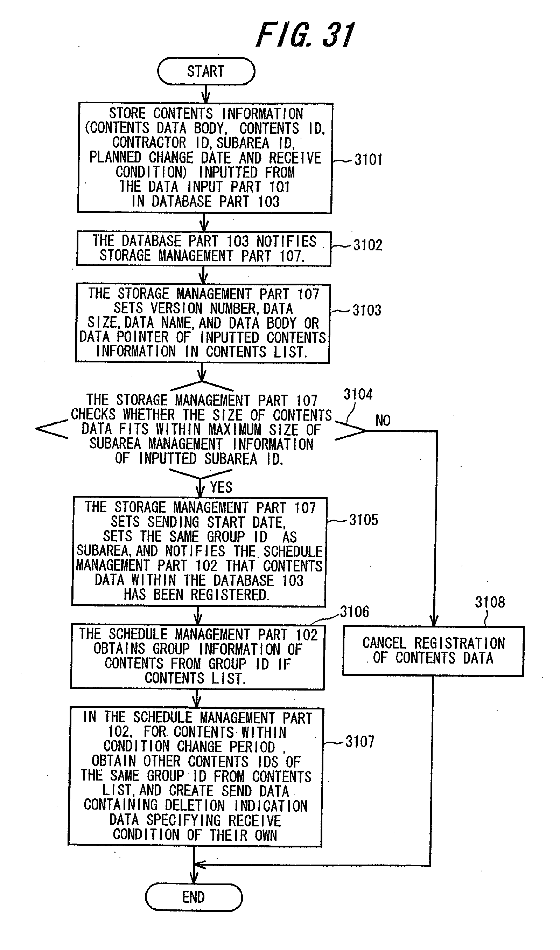

A procedure for creating transmitting data after contents data is inputted, using the examples of FIGS. 32 and 33, will be described with reference to the flowchart of FIG. 31. It is to be understood that the subarea management information and group information of FIG. 33 are inputted from the data input part 101 and held in the database part 103 under management of the storage management part 107.

The data transmitting apparatus stores contents data to be transmitted from the data input part 101 in the contents holding part 1033 of the database part 103 (3101). To input the contents data, a contents ID, contractor ID, subarea ID, planned change date, and receive conditions, along with contents data body, are specified. The database part 103 notifies the storage management part 107 that the contents data has been inputted (3102). The storage management part 107 sets a version number, data size, data name, and pointer to data body or data of the contents data as shown in FIG. 32 in a contents list (3103). Referring to the storage management information (FIG. 32) held in the storage management information holding part 1032, the storage management part 107 checks that the size of the inputted contents fits within a maximum size of the subarea management information after the planned change date (3104).

If the size of the inputted contents does not fit within the maximum size of the subarea management information after the planned change date, the storage management part 107 issues a warning and sets, as a starting date of the contents transmitting, when the inputted contents will fit in a subarea, or outputs an error and discontinues registration of the contents data (3108). If the size of the inputted contents fits within the maximum size of the subarea management information, the storage management part 107 sets the same value as the planned change date as a starting date of the contents transmitting, sets a group ID to 1, formally registers the contents data, and makes notification to the schedule management part 102 (3105). The schedule management part 102 acquires the contents data from the contents list and obtains group information of relevant contents by a group ID (3106). Upon determining from the group information that a group to which the contents belong is within a condition change period, the schedule management part 102 puts indication data for deleting all contents within the group immediately before each contents to create transmitting data as shown in FIG. 20 (3107).

FIG. 20 shows an example of transmitting data created by the procedure of FIG. 31. Contents 1, 2, and 3 belong to the same group and are assigned conditions "use frequency level of 2 or less", "use frequency level of 3", and "use frequency level of 4 or higher", respectively. In the case where the receiving machines having a use frequency level of 3 are storing contents 2 according to their attribute, when a use frequency level of the receiving machines becomes 4, contents 3 instead of contents 2 are to be received. Acquisition of contents data begins from the beginning of a receive unit of FIG. 20, and when "contents 1 deletion data" (2001) and "contents 2 deletion data" (2002) which have the same receive conditions as contents 3 are received, contents 2 acquired previously is deleted. After this, contents 3 (2003) is acquired and stored. Subsequent data is not stored because conditions are different. By this arrangement, even if a condition changes when any of contents within a group has been stored, contents having been stored in an old condition can be deleted. However, this presupposes that identification (contents ID in the example) uniquely deciding contents does not change. Aside from this example, data of content 1 deletion data, content 2 deletion data, and content 3 deletion data without condition, and data of contents 1, contents 2, and contents 3 with condition may be transmitted as one receive unit.

The types of attributes held in the receiving machines may be added. For example, when the receiving machines acquire storage management information over communication, the data transmitting apparatus may pass new attribute information.

By grouping and managing contents having receive conditions as described above, only required contents data matching receive conditions can be stored.

### (Eighth embodiment)

An eighth embodiment is configured as shown in FIG. 1 like the first embodiment. In this embodiment, storage areas of the receiving machines are managed by urgently deleting contents data, aside form contents normally scheduled.

As a method of scheduling of a transmitting data by using FIG. 15 has been described in the first embodiment, the receiving machines receive schedule information of 1516 of FIG. 15 having been received in advance from the data transmitting apparatus and thereby judges what version of which receive unit is to be broadcast in which period to make such a storage plan that starts the reception and storage of contents data from a specified time only for versions different from those held in them. Therefore, even if there is an attempt to delete other contents data to obtain a free space because of the occurrence of contents data to urgently increase a maximum size, the contents data cannot be immediately deleted from the receiving machines because the event is not included in a storage plan of the receiving machines. The following describes an embodiment of the present invention for urgent deletion and replacement of contents data.

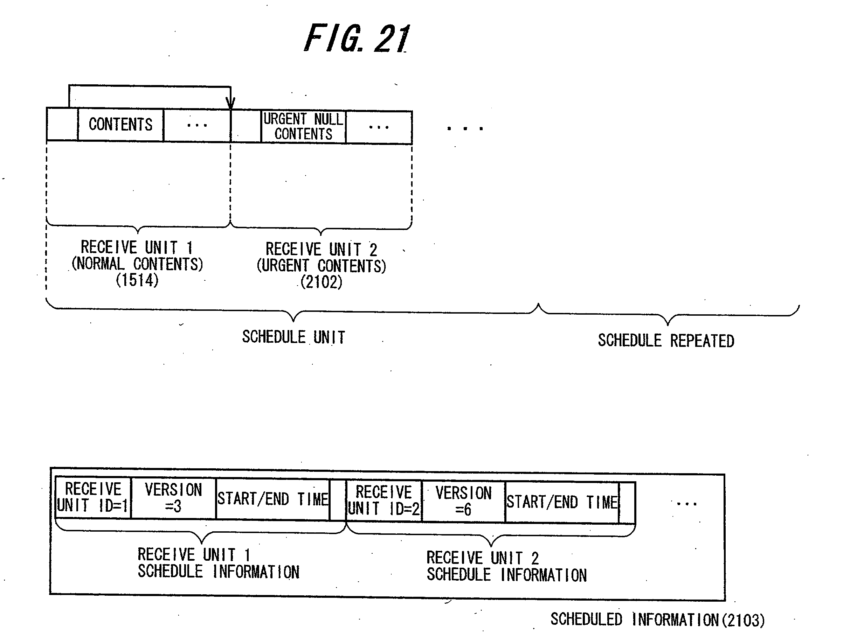

FIG. 21 shows an example of transmitting data containing urgent contents. An urgent receive unit 2102 is always provided in a receive unit scheduled and is transmitted together with normal contents. When there is no urgent data, a content data body is empty. A different version is set each time in schedule information of an urgent receive unit in schedule information 2103 broadcast in advance. Therefore, even when there is no urgent contents, the receiving machines are always arranged to store the urgent receive unit 2102. When contents to be urgently transmitted occurs, the data transmitting apparatus puts the contents data in an urgent receive unit 2102 to be broadcast at a time nearest to a current time before transmitting the urgent receive unit. If more urgent receive units are incorporated in a schedule unit, urgent contents can be more quickly transmitted. In the case where storage to receiving machines to which power is off need not be considered, urgent receive units need not always be provided and rescheduling may be performed for transmitting each time an emergency occurs.

In this way, unscheduled, urgent contents data can be quickly deleted and replaced.

The first to eighth embodiments having been described above are examples of systems using communications and broadcast. Besides these examples, the present invention can also apply to systems transmitting and receiving a part of data over communication, and the present invention can apply partially to systems using only broadcast if the spirit and scope of the present invention are not impaired.

Although the present invention has been described in terms of preferred embodiments shown in the accompanying drawings, it is apparent that the present invention can be easily changed and modified by those skilled in the art, and such modifications will also be included in the scope of the present invention.

## Claims

1. A data transmitting apparatus comprising:
a storage management part for managing a storage area of receiving machines;
a database part for holding storage management information containing classification numbers and a maximum size of each of the classification numbers, and contents data wherein the classification numbers are data for managing storage areas of said receiving machines and are used to classify the contents data;
a schedule management part for scheduling the distribution of data;
a transmitting part for transmitting data; and
a communication part for communicating data,
wherein, according to a schedule decided by said schedule management part, contents data provided with classification numbers and identification numbers for identifying the contents data, and storage management information are distributed to said receiving machines.

2. A receiving machine comprising:
a receiving part for receiving contents data broadcast from a data transmitting apparatus;
a communication part for acquiring data over a communication line;
a storage area for storing; and
a data allocation part for allocating received contents data to said storage area;
wherein:
said data allocation part updates storage management information in said storage area by storage management information acquired in said communication part; and
said data allocation part stores contents data received by said receiving part in said storage area only when it determines that, even if the contents data were stored, a total size of contents data of each classification number in said storage area would not exceed a maximum size for each classification number contained in the storage management information in said storage area.

3. The data transmitting apparatus according to claim 1, wherein, when changing the storage management information, said storage management part decides a distribution start date of the storage management information by a decided date when the storage management information is changed, and an operation value set in said storage management part.

4. The data transmitting apparatus according to claim 1, wherein, when a receiving machine issues a request for acquisition of the storage management information to said data transmitting apparatus, or when notified from a receiving machine that data overflowed, said storage management part detects that said receiving machine failed in acquiring the storage management information according to a predetermined schedule, and said storage management part creates a delete instruction specifying a list of contents data to be deleted in said receiving machine from a storage management information acquisition history, and said communication part distributes the delete instruction to said receiving machine.

5. The receiving machine according to claim 2, wherein, according to a list of contents data to be deleted, specified in a delete instruction received over a communication line by said communication part, said data allocation part deletes fields of applicable contents data from a contents list and the contents data from said storage area.

6. The receiving machine according to claim 2, wherein, upon detecting that the storage management information was unsuccessfully acquired according to a predetermined schedule, said communication part issues a request for acquisition of the storage management information to the data transmitting apparatus, and when the latest storage management information is acquired, said data allocation part compares the storage management information newly acquired and old storage management information held in said storage area, creates a list of contents data to be deleted, and deletes fields of applicable contents data from a contents list and the contents data from said storage area.

7. The receiving machine according to claim 2, including said storage area for holding a storage management information change history and contents data, and said data allocation part for managing a contents list,
wherein, if said data allocation part detects that a total amount of contents data exceeds a maximum size for each classification number, depending on whether contents data received by said receiving part is stored or storage management information received by said communication part is updated, said data allocation part creates a list of causative contents data, and deletes fields of applicable contents data from the contents list and the contents data from said storage area.

8. The data transmitting apparatus according to claim 1, wherein said storage management part appends expiration dates to the storage management information for distribution.

9. The receiving machine according to claim 2, including a timer processing part for performing timer processing,
wherein, when said communication part receives storage management information provided with expiration dates, said timer processing part updates storage management information held in said storage area by the expiration dates.

10. The data transmitting apparatus according to claim 1, further including a data input part for inputting contents data,
wherein said database part holds a maximum size of each of one or more subareas to which a maximum storage size of a receiving machine is split and allocated, whereby, when contents data with a subarea specified is inputted from said data input part, said storage management part checks whether the size of the contents data does not exceed a maximum size of each subarea, and holds only contents data passing the checking in said database part.

11. The data transmitting apparatus according to claim 10, wherein, if subareas increasing in maximum size or subareas to be added, and subareas decreasing in maximum size or subareas to be deleted exist at the same time when maximum sizes of subareas are changed, said schedule management part performs scheduling so that delete indication data or decreased data is distributed before added data or increased data is distributed.

12. The data transmitting apparatus according to claim 10, wherein, when subareas increasing in maximum size or subareas to be added exist, said storage management part keeps a subarea change history, whereby said schedule management part uses the subarea change history to perform scheduling so that added data or increased data is preceded by contents data in subareas decreasing in maximum size within a period satisfying a placement condition or deleted contents data.

13. The data transmitting apparatus according to claim 11, wherein, if subareas increasing in maximum size or subareas to be added, and subareas decreasing in maximum size or subareas to be deleted exist at the same time when maximum sizes of subareas are changed, said schedule management part uses an operation value set in said storage management part to perform scheduling so that delete indication data or decreased data is distributed before added data or increased data is distributed.

14. The data transmitting apparatus according to claim 10, further including a terminal management part for managing a history indicating whether delete indication data or decreased data is acquired for each receiving machine, wherein, if subareas increasing in maximum size or subareas to be added, and subareas decreasing in maximum size or subareas to be deleted exist at the same time when maximum sizes of subareas are changed, said storage management part collects statistics from a history indicating whether receiving machines managed by said terminal management part acquired delete indication data or decreased data, and finds percentages of receiving machines that successfully acquired them, and the schedule management part performs scheduling to transmit added data or increased data when a specified percentage is exceeded.

15. The data transmitting apparatus according to claim 10, wherein said storage management part holds a subarea change history or contents data size change history, whereby, when notified from a receiving machine that data overflowed, said storage management part uses the subarea change history or contents data size change history to create a delete instruction specifying a list of contents data to be deleted, and said communication part distributes the delete instruction to said receiving machine.

16. The receiving machine according to claim 2, wherein said data allocation part holds a change history of subareas in which contents data was stored, or contents data size change history, whereby, if said data allocation part detects that storage of contents data received by said receiving part will cause a maximum size for each classification number to be exceeded, said data allocation part uses the contents data size change history to create a list of contents data to be deleted, and deletes fields of applicable contents data from a contents list and the contents data from said storage area.

17. The receiving machine according to claim 2, wherein, if said data allocation part detects that storage of contents data received by said receiving part will cause a maximum storage size of said storage area to be exceeded, said data allocation part deletes contents data from said database part according to a deletion condition and deletes applicable fields from a contents list.

18. The receiving machine according to claim 17, wherein the deletion condition is classification numbers or identification information appended to contents data.

19. The receiving machine according to claim 17, wherein said storage management part manages, for each receiving machine, a history when notified from said receiving machine that data overflowed, whereby the existence of a receiving machines with history information satisfying a given condition is detected and said communication part distributes an instruction to delete all contents data to said receiving machine.

20. The receiving machine according to claim 17, wherein, if said data allocation part detects that storage of contents data received by said receiving part will cause a maximum size for each classification number to be exceeded, said storage area holds history information about overflow, whereby, when the history information satisfies a given condition, said data allocation part deletes all contents data from the storage area and deletes all fields from a contents list.

21. The receiving machine according to claim 17, wherein said data processing part holds a viewing history for each contents data in a storage area, whereby if said data allocation part detects that storage of contents data received by said receiving part will cause a maximum size of a storage area to be exceeded, contents data having not been viewed for a longer period is deleted earlier.

22. The data transmitting apparatus according to claim 1, wherein said storage management part manages, for each receiving machine, information about acquisition by receiving machines of delete instructions distributed over a communication line, whereby said storage management part creates, for each of said receiving machines, a delete instruction specifying a list consisting of contents data to be deleted, not acquired by said receiving machine, and said communication part distributes the delete instruction.

23. The data transmitting apparatus according to claim 22, wherein said storage management part deletes a list of contents data to be deleted, acquired by over a given percentage of receiving machines, from said database part.

24. The receiving machine according to claim 2, including an input part capable of selecting contents data to be stored,
wherein a selection type contents data maximum size is held in said storage area to store a maximum size of selection type contents data, whereby, when contents data selected in said input part is received, said data allocation part checks the size of the received contents data and stores the received contents data in said storage area only when storage of the contents data will not cause the selection type contents data maximum size held in said storage area to be exceeded.

25. The receiving machine according to claim 2, wherein, when the data transmitting apparatus groups plural contents data and sets different receive conditions in each contents data within a group to transmit the contents data, said storage area holds attribute information specific to the receiving machine or users, said data processing part selects only contents data, of contents data within an identical group received by said receiving part, in which a receive condition matching attribute information held in said storage area is set, and said data allocation part stores only contents data selected by said data processing part in said storage area.

26. The data transmitting apparatus according to claim 1, further including a data input part for receiving data in which a different receive condition is set in each contents data within a group of plural contents data,
wherein, when receive conditions to be set in contents data within an identical group are changed, or when the attribute information held in the receiving machine may be changed, said schedule management part creates, for each contents data, transmitting data provided with data containing an indication to delete other contents data within the same group as the contents data, and said transmitting part transmits the transmitting data.

27. The data transmitting apparatus according to claim 26, wherein, when a receive condition appended to contents data within the group specifies that said input part in the receiving machine can receive only one of contents data within an identical group, maximum sizes of contents data within an identical group in storage management information held in said database part are set identical, and the sum of maximum sizes of groups is set to a storage area maximum size.

28. The data transmitting apparatus according to claim 1, wherein said schedule management part provides a different reserve transmitting time zone than is provided for contents data normally scheduled, and when it becomes necessary to transmit contents data other than that normally scheduled, creates transmitting data in the reserve transmitting time zone, and said transmitting part transmits it.

29. A data broadcast schedule system transmitting and receiving data over a transmission line, wherein:
a receiving machine of the data broadcast schedule system has a data allocation part for allocating a storage area of the receiving machine to each of data to be received; and
a data transmitting apparatus to transmit data to the receiving machine has a schedule management part for making a transmitting schedule according to the result of predicting or determining an increase or decrease in said storage area of the receiving machine that can be allocated to each data.

30. The data broadcast schedule system according to claim 29 that transmits and receives data over a transmission line, wherein said schedule management part of the data transmitting apparatus makes a transmitting schedule so that, when it is predicted that arbitrary data being transmitted increases and other data being transmitted decreases, it decreasingly transmits the other data for a while before increasingly transmitting the arbitrary data.

31. A data broadcast schedule system transmitting and receiving data over a transmission line, wherein a data transmitting apparatus that transmits data to a receiving machine to transmit and receive data has a schedule management part for making a transmitting schedule according to the result of predicting or determining an increase or decrease in the storage area of the receiving machine that can be allocated to each data.

32. The data broadcast schedule system according to claim 31 that transmits and receives data over a transmission line, wherein the schedule management part of the data transmitting apparatus makes a transmitting schedule so that, when it is predicted that arbitrary data being transmitted increases and other data being transmitted decreases, it decreasingly transmits the other data for a while before increasingly transmitting the arbitrary data.

33. A data broadcast schedule method for transmitting and receiving data over a transmission line, wherein a data transmitting apparatus that transmits data to a receiving machine to transmit and receive data makes a transmitting schedule according to the result of predicting or determining an increase or decrease in the storage area of the receiving machine that can be allocated to each data.

34. A recording medium in which a data broadcast schedule program for transmitting and receiving data over a transmission line is recorded, wherein a data transmitting apparatus that transmits data to a receiving machine to transmit and receive data makes a transmitting schedule according to the result of predicting or determining an increase or decrease in the storage area of the receiving machine that can be allocated to each data.

35. A data broadcast schedule program for transmitting and receiving data over a transmission line, wherein a data transmitting apparatus that transmits data to a receiving machine to transmit and receive data makes a transmitting schedule according to the result of predicting or determining an increase or decrease in the storage area of the receiving machine that can be allocated to each data.
